# FASCICULE DE BREVET EUROPEEN

(11) **EP 4 072 371 B1**
(45) Date de publication et mention de la délivrance du brevet: **10.07.2024**
(21) Numéro de dépôt: 20845168.2
(22) Date de dépôt: 10.12.2020
(51) Int. Cl.: A44B 18/00, B29C 43/22, B29C 41/28, B29C 33/38

(54) **DISPOSITIF AUTO-AGRIPPANT AMELIORE ET DISPOSITIF DE MOULAGE ASSOCIE**
VERBESSERTE SELBSTKLEBENDE VORRICHTUNG UND ZUGEHÖRIGE FORMVORRICHTUNG
IMPROVED SELF-ADHESIVE DEVICE AND ASSOCIATED MOULDING DEVICE

(30) Priorité: 11.12.2019 FR 1914165; 11.12.2019 FR 1914162
(43) Date de publication de la demande: 19.10.2022
(60) Demande divisionnaire: 24180031.7
(73) Titulaire: Aplix, 44850 Le Cellier (FR)
(72) Inventeur: SURGET, Nicolas, 44850 LE CELLIER (FR); LINOT, Pierre-Yves, François, Jean, 44850 LE CELLIER (FR)
(74) Mandataire: Cabinet Beau de Loménie
(86) Numéro de dépôt international: PCT/FR2020/052379
(87) Numéro de publication internationale: WO 2021/116612

(56) Documents cités:
- WO-A1-2019/145646
- WO-A2-01/67911
- US-B1- 6 258 311

## Description

### Domaine Technique

Le présent exposé concerne les dispositifs auto agrippants.

### Technique antérieure

On connait plusieurs systèmes et procédés pour la réalisation d'éléments de retenue munis de moyens de retenue tels que des crochets, par exemple tels que décrits dans les documents WO2017187096, WO2017187097, WO2017187098, WO2017187099, WO2017187101, WO2017187102,

WO2017187103 et WO2019145646, ce dernier document décrivant le préambule des revendications 1 et 12.

Une problématique récurrente concerne la réalisation de bandes comprenant des zones avec éléments de retenue, et des zones dépourvues d'éléments de retenue, qui est techniquement complexe et onéreuse. Par ailleurs, il est actuellement difficile de réaliser une délimitation claire entre les zones présentant des éléments de retenue et les zones adjacentes dépourvues d'éléments de retenue.

### Exposé de l'invention

Le présent exposé vise ainsi à répondre au moins partiellement aux problématiques mentionnées précédemment.

Le présent exposé concerne ainsi un dispositif de retenue tel que défini par la revendication 1, comprenant une base présentant une face supérieure et une face inférieure, la base s'étendant selon une direction primaire, présentant une largeur définie selon une direction secondaire perpendiculaire à la direction primaire, et une épaisseur mesurée selon une direction perpendiculaire à la direction primaire et à la direction secondaire, une pluralité d'éléments de retenue s'étendant sur la face supérieure de la base, chaque élément de retenue comprenant une tige, les éléments de retenue étant formés d'une seule pièce, par exemple d'une seule pièce et issue d'extrusion, avec la base, les éléments de retenue étant agencés en lignes et en colonnes s'étendant respectivement selon la direction secondaire et la direction primaire, ledit dispositif étant caractérisé en ce que au moins X lignes et/ou X colonnes du dispositif de retenue présentent des nombres distincts d'éléments de retenue, où X est égal à 2. En particulier, X est égal à 3 ou 4 ou 5 ou 6 pour permettre de réaliser un motif complexe avec un niveau de détails suffisamment précis. Plus généralement, X est typiquement un entier naturel compris entre Xmin et Xmax, où Xmin peut être par exemple égal à 2 ou 3 ou 4 ou 5 ou 6 ou 7 ou 8 ou 9 ou 10 ou 12 ou 15 ou 20, et Xmax peut par exemple être égal à 500 ou 450 ou 400 ou 350 ou 300 ou 250 ou 200 ou 150 ou 100 ou 50. L'invention telle que revendiquée permet notamment de définir des motifs ayant un aspect avec une précision optimisée et améliorée par rapport à ceux de l'art antérieur tout en conservant une capacité d'accroche importante/satisfaisante, voire même équivalente à un contour externe présentant une forme similaire et sans zone dépourvue d'éléments de retenue.

Selon un exemple, au moins deux lignes et/ou au moins deux colonnes du dispositif de retenue présentent un nombre d'éléments de retenue distinct, la différence entre les nombres d'éléments de retenue desdites au moins deux lignes et/ou au moins deux colonnes étant supérieure ou égale à 1, ou plus précisément, supérieure ou égale à 2, ou par exemple supérieure ou égale à 3 ou 4 ou 5 ou 6 pour permettre de réaliser un motif complexe avec un niveau de détails suffisamment précis.

Ladite pluralité d'éléments de retenue forme un ou plusieurs motifs disjoints, chaque motif étant formé d'une pluralité de lignes et de colonnes d'éléments de retenue. Par disjoints, on entend que les motifs sont séparés par au moins une ligne et/ou une colonne dépourvue d'éléments de retenue. Selon un exemple, les éléments de retenue sont agencés de manière à former un motif régulier sur la face supérieure de la base. On entend par régulier le fait que le motif se répète dans la direction primaire. En variante de réalisation, les éléments de retenue sont agencés de manière à former plusieurs motifs différents sur la face supérieure de la base, typiquement des motifs réguliers, par exemple, des motifs qui se répètent en alternance ou non sur la face supérieure de la base et dans la direction primaire.

Selon un exemple, les éléments de retenue sont agencés de manière à former un motif sur face supérieure de la base, typiquement un motif régulier. On entend par régulier le fait que le motif se répète dans la direction primaire. En variante de réalisation, les éléments de retenue sont agencés de manière à former plusieurs motifs différents sur la face supérieure de la base, typiquement des motifs réguliers, par exemple, des motifs qui se répètent en alternance ou non sur la face supérieure de la base et dans la direction primaire.

Selon un exemple, la face supérieure de la base, par exemple dans une zone de motif, comprend un nombre d'éléments de retenue/cm selon la direction primaire et/ou selon la direction secondaire supérieur à 2 éléments de retenue/cm, plus précisément supérieur à 5 éléments de retenue /cm, en particulier supérieur à 10 cavités/cm, et inférieur à 1 500 éléments de retenue /cm, plus précisément inférieur 1 000 éléments de retenue /cm et par exemple inférieur à 700 éléments de retenue /cm, plus particulièrement inférieur à 400 éléments de retenue /cm, encore plus particulièrement inférieur à 200 éléments de retenue /cm.

Selon un exemple, pour chaque motif, chaque couple de lignes agencées successivement selon la direction primaire présente un nombre d'éléments de retenue dont la variation est inférieure ou égale à 10 éléments de retenue, en particulier est inférieure ou égale à 5 éléments de retenue, ce qui permet par exemple de faciliter le démoulage.

Selon un exemple, pour chaque motif, chaque couple de lignes agencées successivement selon la direction primaire présente un nombre d'éléments de retenue et optionnellement seulement celles présentant un nombre d'éléments de retenue supérieur ou égal à 7 éléments de retenue, notamment 8 éléments de retenue, par exemple 9 éléments de retenue, dont la variation est inférieure ou égale à 40% du nombre maximum d'éléments de retenue des lignes dudit couple de lignes d'éléments de retenue, typiquement inférieure ou égale à 30% ou à 15%.

Selon un exemple, pour chaque motif, chaque couple de colonnes agencées successivement selon la direction secondaire présente un nombre d'éléments de retenue dont la variation est inférieure ou égale à 15 éléments de retenue, ou inférieure ou égale à 10 éléments de retenue en particulier est inférieure ou égale à 5 éléments de retenue.

Selon un exemple, pour chaque motif, chaque couple de colonnes agencées successivement selon la direction secondaire présente un nombre d'éléments de retenue et optionnellement seulement ceux présentant un nombre d'éléments de retenue supérieur ou égale à 7 éléments de retenue, notamment 8 éléments de retenue, par exemple 9 éléments de retenue, dont la variation est inférieure ou égale à 40% du nombre maximum d'éléments de retenue des colonnes dudit couple de colonnes d'éléments de retenue, typiquement inférieure ou égale à 30% ou à 15%.

Selon un exemple, chaque motif est entièrement entouré d'une région de la face supérieure de la base dépourvue d'éléments de retenue, et est situé à une distance supérieure à 1 ,5mm, en particulier, 2,5 mm à partir d'une bordure de la base, en particulier de toutes les bordures de la base.

Chaque motif est délimité par un contour externe, et chaque motif comprend, dans la zone délimitée par son contour externe, au moins une zone dépourvue d'éléments de retenue. Selon un exemple, le contour externe peut être bordé sur la base par une rainure (continue ou discontinue) ou un plot (continu ou discontinu) et respectivement sur la bande de moulage par un plot (continu ou discontinu) ou une rainure (continue ou discontinue).

Selon un exemple, le (ou chaque) motif étant délimité par un contour externe, et le (ou chaque) motif comprenant, dans la zone délimitée par son contour externe, au moins une zone dépourvue d'éléments de retenue, les (de préférence chaque) éléments de retenue agencés à proximité immédiate du contour externe et/ou interne (et/ou le ou les définissants) présentent une forme de tige similaire ou identique à celles des éléments de retenue à distance du contour externe et/ou interne. Selon un exemple, le (ou chaque) motif étant délimité par un contour externe, et le (ou chaque) motif comprenant, dans la zone délimitée par son contour externe, au moins une zone dépourvue d'éléments de retenue, les (de préférence chaque) éléments de retenue agencés à proximité immédiate du contour externe et/ou interne (et/ou le ou les définissants) présentent une forme de tête similaire ou identique à celles des éléments de retenue à distance du contour externe et/ou interne. Par proximité immédiate, on entend les éléments de retenue se trouvant dans les lignes et/ou colonnes adjacentes ou espacées d'un maximum de 2 lignes et /ou colonnes des lignes et/ou colonnes définissant le contour externe ou interne considéré. Par opposition, on considère que les éléments de retenue étant séparés du contour interne ou externe considéré par au moins deux lignes et/ou colonnes sont à distance du contour considéré, ou plus généralement que les éléments de retenue qui ne sont pas à proximité immédiate du contour considéré sont à distance du contour considéré. Ainsi, le dispositif de retenue présente une accroche maximisée, en particulier à proximité immédiate des contours externe et/ou interne tout en ayant une représentation plus précise du motif. Les éléments de retenue à proximité immédiate du contour externe et/ou interne (et/ou le ou les définissants) ont ainsi une capacité d'accroche optimisée sans entraver la coopération avec la contrepartie.

Selon un exemple, le (ou chaque) motif étant délimité par un contour externe, et le (ou chaque) motif comprenant, dans la zone délimitée par son contour externe, au moins une zone dépourvue d'éléments de retenue (ou le cas échéant de cavités), le contour interne présente au moins une portion locale de forme allongée définissant une ligne médiane locale agencée à une distance du contour interne local inférieure à 20%, en particulier inférieure à 15%, de la dimension du motif selon la direction primaire et/ou la direction secondaire. En variante ou en complément, le (ou chaque) motif étant délimité par un contour externe, et le (ou chaque) motif comprenant, dans la zone délimitée par son contour externe, au moins une zone dépourvue d'éléments de retenue, le contour interne présente au moins une portion locale de forme allongée définissant une ligne médiane locale agencée à une distance du contour interne local inférieure à 10mm, ou inférieure à 5mm, en particulier inférieure 3mm, plus particulièrement inférieure à 2mm, encore plus particulièrement inférieure à 1mm et supérieure ( ou strictement supérieure) à un pas moyen des éléments de retenue dans le motif considéré. Une zone circulaire dépourvue d'éléments de retenue ne forme pas une médiane au sens du présent document. Ainsi, le dispositif de retenue présente une accroche maximisée tout en permettant une représentation plus détaillée et précise du motif. La ligne médiane locale comprend des portions droites et/courbes. La longueur de la ligne médiane du au moins un contour interne est typiquement supérieure à 10mm, de préférence supérieure à 12 mm. La somme des longueurs des lignes médianes des contours internes d'un motif est typiquement supérieure à 12 mm, par exemple supérieure à 15 mm et/ou typiquement inférieure à 600 mm, par exemple inférieure à 400 mm, plus particulièrement inférieure à 200mm. Une telle configuration peut également être transposée aux cavités formées dans la bande de moulage décrite dans la suite du texte.

Selon un exemple, chaque motif présente au moins une ligne et/ou au moins une colonne comprenant au moins deux groupes d'éléments de retenue disjoints séparés par une zone dépourvue d'éléments de retenue. Selon un exemple, les éléments de retenue comportent chacun une tige et une tête, la tête étant formée par deux ailes qui sont opposées et qui s'étendent selon une même direction ou la tête s'étend tout autour de la tige sur 360°.

Pour chaque motif, au moins une zone dépourvue d'éléments de retenue incluse dans le motif présente une largeur et une longueur, de sorte que le rapport entre la longueur et la largeur soit strictement supérieur à 1,2. Selon un exemple, pour chaque motif, au moins une, de préférence chaque, zone dépourvue d'éléments de retenue incluse dans le motif présente une largeur et une longueur, de sorte que le rapport entre la longueur et la largeur soit strictement supérieur à 1,1, en particulier strictement supérieure à 1,2 plus particulièrement strictement supérieur à 1,5.

Selon un exemple, pour chaque motif, au moins une, de préférence chaque, zone dépourvue d'éléments de retenue incluse dans le motif présente une dimension maximale et une dimension minimale, de sorte que le rapport entre la dimension maximale et la dimension minimale soit strictement supérieur à 1,1, en particulier strictement supérieure à 1,2, plus particulièrement strictement supérieur à 1,4 et encore plus particulièrement supérieur strictement à 1.6.

Selon un exemple, lesdites lignes et colonnes sont espacées régulièrement selon un intervalle secondaire et un intervalle primaire respectivement. Selon un autre exemple, lesdites lignes sont espacées régulièrement selon un premier intervalle secondaire et selon un deuxième intervalle secondaire, le deuxième intervalle secondaire n'étant pas un multiple entier du premier intervalle secondaire et le premier intervalle secondaire étant inférieur au deuxième intervalle secondaire, et/ou lesdites colonnes sont espacées régulièrement selon un premier intervalle primaire et selon un deuxième intervalle primaire, le deuxième intervalle primaire n'étant pas un multiple entier du premier intervalle primaire et le premier intervalle primaire étant inférieur au deuxième intervalle primaire.

Selon un exemple, chaque motif est entièrement entouré d'une région de la face supérieure de la base dépourvue d'éléments de retenue, ladite région présentant une dimension strictement supérieure à deux fois l'intervalle primaire selon la direction primaire, et/ou strictement supérieure à deux fois l'intervalle secondaire selon la direction secondaire.

Selon un exemple, ladite au moins une zone dépourvue d'éléments de retenue comprise dans la zone délimitée par le contour externe de chaque motif présente une dimension selon la direction primaire strictement supérieure à deux fois l'intervalle primaire, et une dimension selon la direction secondaire strictement supérieure à deux fois l'intervalle secondaire.

Selon un exemple, pour chaque motif, le rapport entre la surface des zones dépourvues d'élément de retenue contenues dans le contour externe du motif et la surface comprenant des éléments de retenue est inférieur à 1. Selon un exemple, le au moins un motif, est symétrique. Selon un autre exemple, le motif est délimité par une ou plusieurs bordures (internes et/ou externes), la somme des longueurs des bordures internes et externes est supérieure à 70mm, de préférence supérieure à 95mm, de préférence supérieure à 100mm, et plus particulièrement supérieure à 150mm et dans certains cas inférieur à 5 000mm, plus particulièrement inférieure à 3000mm. Ainsi, plus les bordures externes et internes sont longues et plus l'effet de tapis de fakir est réduit. L'effet tapis de fakir est un effet dans le domaine des fixations du type crochets boucles qui, en raison du trop grand nombre de crochets par rapport au nombre de boucles, il est rendu difficile, voire impossible, aux crochets de pénétrer dans les boucles pour former une fixation crochets boucles. Le dispositif d'élément de retenue a donc une capacité plus importante à coopérer avec des boucles agrippantes. Selon un exemple, le motif s'inscrit dans un polygone à quatre côtés dont chaque cotés affleure une portion du périmètre extérieur du motif et le polygone comprenant un périmètre P1. Le ratio (Pint+Pext)/P1 est supérieur à 1, dans certains cas supérieur à 1,2 ou 1,3 ou 1,4 ou 1,5 ou 1,6 et dans certains cas inférieur à 20, en particulier inférieur à 15. Ainsi, plus les bordures externes et internes sont longues et plus l'effet de tapis de fakir est réduit. Le dispositif d'élément de retenue a donc une capacité plus importante à coopérer avec des boucles agrippantes.

Le présent exposé concerne également un dispositif de moulage tel que défini dans les revendications pour la formation d'un dispositif de retenue, par exemple tel que défini précédemment, ledit dispositif de moulage comprenant une bande de moulage adaptée pour être montée sur un support, ladite bande de moulage s'étendant selon une direction machine, présentant une largeur définie selon une direction transverse perpendiculaire à la direction machine, et une épaisseur mesurée selon une direction perpendiculaire à la direction machine et à la direction transverse, la bande de moulage présentant une face interne et une face externe opposées,
ladite bande de moulage présentant une pluralité de cavités agencées en lignes et en colonnes s'étendant respectivement selon la direction transverse et la direction machine, lesdites cavités débouchant sur la face externe de la bande de moulage, caractérisé en ce qu'au moins Y lignes et/ou Y colonnes de cavités de la bande de moulage présentent des nombres distincts de cavités, où Y est égal à 2. En particulier, Y est égal à 3 ou 4 ou 5 ou 6 pour permettre de réaliser un motif complexe avec un niveau de détails suffisamment précis. Plus généralement, Y est typiquement un entier naturel compris entre Ymin et Ymax, où Ymin peut être par exemple égal à 2 ou 3 ou 4 ou 5 ou 6 ou 7 ou 8 ou 9 ou 10 ou 12 ou 15 ou 20, et Ymax peut par exemple être égal à 500 ou 450 ou 400 ou 350 ou 300 ou 250 ou 200 ou 150 ou 100 ou 50.

Une ligne de cavités comprend typiquement entre 1 et 1000 cavités. Une colonne de cavités comprend typiquement entre 1 et 1000 cavités

Selon un exemple, au moins deux lignes et/ou au moins deux colonnes du dispositif de moulage présentent un nombre distinct de cavités, la différence entre les nombres de cavités desdites au moins deux lignes et/ou au moins deux colonnes étant supérieure ou égale à 1, ou plus précisément supérieure ou égale à 2, ou par exemple supérieure ou égale à 3 ou 4 ou 5 ou 6 pour permettre de réaliser un motif complexe avec un niveau de détails suffisamment précis.

Ladite pluralité de cavités forme un ou plusieurs motifs disjoints, chaque motif étant formé d'une pluralité de lignes et de colonnes de cavités. Par disjoints, on entend que les cavités sont séparées par au moins une ligne et/ou une colonne dépourvue de cavités. Selon un exemple, les cavités sont agencées de manière à former un motif régulier sur la bande de moulage. On entend par régulier le fait que le motif se répète dans la direction machine. En variante de réalisation, les cavités sont agencées de manière à former plusieurs motifs différents sur la bande de moulage, typiquement des motifs réguliers, par exemple, des motifs qui se répètent en alternance ou non sur la bande de moulage et dans la direction machine.

Selon un exemple, pour chaque motif, chaque couple de lignes agencées successivement selon la direction machine présente un nombre de cavités dont la variation est inférieure ou égale à 10 cavités, ou plus précisément inférieure ou égale à 5 cavités, ce qui permet par exemple de faciliter le démoulage.

Selon un exemple, pour chaque motif, chaque couple de lignes agencées successivement selon la direction machine présente un nombre de cavités et optionnellement seulement celles présentant un nombre de cavités supérieur ou égale à 7 cavités, notamment 8 cavités, par exemple 9 cavités, dont la variation est inférieure ou égale à 40% du nombre maximum de cavités des lignes dudit couple de lignes de cavités, typiquement inférieure ou égale à 30% ou à 15%.

Selon un exemple, pour chaque motif, chaque couple de colonnes agencées successivement selon la direction transverse présente un nombre de cavités dont la variation est inférieure ou égale à 15 cavités, ou inférieure ou égale à 10 cavités ou plus précisément inférieure ou égale à 5 cavités.

Selon un exemple, pour chaque motif, chaque couple de colonnes agencées successivement selon la direction transverse présente un nombre de cavités et optionnellement seulement ceux présentant un nombre de cavités supérieur ou égale à 7 cavités, notamment 8 cavités, par exemple 9 cavités, dont la variation est inférieure ou égale à 40% du nombre maximum de cavités des lignes dudit couple de lignes de cavités, typiquement inférieure ou égale à 30% ou à 15%.

Selon un exemple, chaque motif est entièrement entouré d'une région de la face externe de la bande de moulage dépourvue d'éléments de retenue, et est situé à une distance supérieure à 1,5 mm, en particulier supérieure à 2,5 mm à partir d'une bordure de la bande de moulage, en particulier de toutes les bordures de la bande de moulage.

Chaque motif est délimité par un contour externe, et chaque motif comprend, dans la zone délimitée par son contour externe, au moins une zone dépourvue de cavités.

Selon un exemple, chaque motif présente au moins une ligne et/ou au moins une colonne comprenant au moins deux groupes de cavités disjoints séparés par une zone dépourvue de cavités.

Pour au moins un motif, au moins une zone dépourvue de cavités incluse dans le motif présente une largeur et une longueur, de sorte que le rapport entre la longueur et la largeur soit strictement supérieur à 1,2. Selon un exemple, pour au moins un motif, au moins une, ou par exemple chaque, zone dépourvue de cavités incluse dans le motif présente une largeur et une longueur, de sorte que le rapport entre la longueur et la largeur soit strictement supérieur à 1,2, en particulier strictement supérieure à 1,5.

Selon un exemple, pour chaque motif, au moins une, ou par exemple chaque, zone dépourvue de cavités incluse dans le motif présente une largeur et une longueur, de sorte que le rapport entre la longueur et la largeur soit strictement supérieur à 1,2, en particulier strictement supérieure à 1,5.

Selon un exemple les cavités du dispositif de moulage sont traversantes.

Selon un exemple, lesdites colonnes et lignes sont espacées régulièrement selon un intervalle transverse et un intervalle machine respectivement. Selon un autre exemple, lesdites lignes sont espacées régulièrement selon un premier intervalle transverse et selon un deuxième intervalle transverse, le deuxième intervalle transverse n'étant pas un multiple entier du premier intervalle transverse et le premier intervalle transverse étant inférieur au deuxième intervalle transverse, et/ou lesdites colonnes sont espacées régulièrement selon un premier intervalle machine et selon un deuxième intervalle machine, le deuxième intervalle machine n'étant pas un multiple entier du premier intervalle machine et le premier intervalle machine étant inférieur au deuxième intervalle machine.

Selon un exemple, chaque motif est entièrement entouré d'une région de la face externe de la bande de moulage dépourvue de cavités, ladite région présentant une dimension strictement supérieure à deux fois l'intervalle machine selon la direction machine, et strictement supérieure à deux fois l'intervalle transverse selon la direction transverse.

Selon un exemple, ladite au moins une zone dépourvue de cavités comprise dans la zone délimitée par le contour externe de chaque motif présente une dimension selon la direction machine strictement supérieure à deux fois l'intervalle machine, et une dimension selon la direction transverse strictement supérieure à deux fois l'intervalle transverse.

Selon un exemple, pour chaque motif, le rapport entre la surface des zones dépourvues de cavités contenues dans le contour externe et la surface comprenant des cavités est inférieur à 1. Selon un exemple, le au moins un motif, est symétrique. Selon un autre exemple, le motif est délimité par une ou plusieurs bordures (internes et/ou externes), la somme des longueurs des bordures internes et externes est supérieure à 70mm, de préférence supérieure à 95mm, de préférence supérieure à 100mm, plus particulièrement supérieure à 150mm et dans certains cas inférieur à 5 000mm, plus particulièrement inférieure à 3000mm. Ainsi, plus les bordures externes et internes sont longues et plus l'effet de « tapis de fakir » est réduit. Le dispositif d'élément de retenue obtenu à l'aide d'un tel dispositif de moulage a donc une capacité plus importante à coopérer avec des boucles agrippantes. Selon un exemple, le motif s'inscrit dans un polygone à quatre côtés dont chaque cotés affleure une portion du périmètre extérieur du motif et le polygone comprenant un périmètre P1. Le ratio (Pint+Pext)/P1 est supérieure à 1, dans certains cas supérieure à 1,2 ou 1,3 ou 1,4 ou 1,5 ou 1,6 et dans certains cas inférieur à 20, en particulier inférieure à 15. Ainsi, plus les bordures externes et internes sont longues et plus l'effet de « tapis de fakir » est réduit. Le dispositif d'élément de retenue obtenu à l'aide d'un tel dispositif de moulage a donc une capacité plus importante à coopérer avec des boucles agrippantes.

Le présent exposé concerne en outre un dispositif de retenue comprenant une base, typiquement continue, présentant une face supérieure et une face inférieure, la base s'étendant selon une direction primaire, présentant une largeur définie selon une direction secondaire perpendiculaire à la direction primaire, et une épaisseur mesurée selon une direction perpendiculaire à la direction primaire et à la direction secondaire, une pluralité d'éléments de retenue s'étendant sur la face supérieure de la base, chaque élément de retenue comprenant une tige, les éléments de retenue étant formés d'une seule pièce avec la base, les éléments de retenue étant agencés en lignes et en colonnes s'étendant respectivement selon la direction secondaire et la direction primaire, lesdites lignes et colonnes étant typiquement espacées régulièrement selon un intervalle primaire et un intervalle secondaire respectivement, ladite pluralité d'éléments de retenue formant un ou plusieurs motifs disjoints, chaque motif étant formé d'une pluralité de lignes et de colonnes d'éléments de retenue, ledit dispositif étant caractérisé en ce que les éléments de retenue présentent chacun une tige s'étendant depuis la face supérieure de la base, et une tête surmontant la tige, et pour un motif, typiquement pour chaque motif, les têtes des éléments de retenue formant une première extrémité du motif selon une première direction présentent une première dimension maximale selon une seconde direction, et les têtes des éléments de retenue formant une seconde extrémité du motif selon ladite première direction, opposée à ladite première extrémité du motif selon la première direction, présentent une seconde dimension maximale selon ladite seconde direction, la seconde dimension maximale étant strictement inférieure à la première dimension maximale.

Selon un exemple, pour un motif, la dimension maximale des têtes des éléments de retenue diminue depuis la première extrémité du motif vers la seconde extrémité du motif selon la seconde direction.

Selon un exemple, les éléments de retenue formant la première extrémité et les éléments de retenue formant une deuxième extrémité sont agencés sur une même colonne ou ligne. La première direction correspond typiquement à la direction primaire ou à la direction machine ; le sens de la première extrémité vers la deuxième extrémité correspond typiquement au sens de défilement du ruban selon la direction machine lors de sa réalisation.

Le présent exposé concerne également un dispositif de moulage pour la formation d'un dispositif de retenue comprenant une base munie d'une pluralité d'éléments de retenue et/ou de préformes d'éléments de retenue, le dispositif de moulage comprenant une bande de moulage formée dans un premier matériau et adaptée pour être montée sur un support, la bande de moulage s'étendant selon une direction machine, présentant une largeur définie selon une direction transverse perpendiculaire à la direction machine, et une épaisseur mesurée selon une direction perpendiculaire à la direction machine et à la direction transverse, la bande de moulage présentant une face interne et une face externe, ladite bande de moulage comprenant une pluralité de cavités, caractérisé en ce qu'une partie desdites cavités sont au moins partiellement obturées par un matériau de bouchage, de manière à définir des cavités de moulage pour la formation d'éléments de retenue et/ou de préformes d'éléments de retenue, et des cavités non fonctionnelles.

Selon un exemple, le matériau de bouchage est distinct du premier matériau.

Selon un exemple, le matériau de bouchage et/ou le premier matériau et/ou le matériau de moulage sont distincts.

Selon un exemple, le matériau de bouchage est formé d'une seule couche. Selon un autre exemple le matériau de bouchage est formé de plusieurs couches, par exemple entre 2 et 20 couches.

Selon un exemple, le matériau de bouchage s'étend au moins en partie dans des cavités de la bande de moulage. Selon un exemple, le matériau de bouchage est fixé à la bande de moulage, en particulier à au moins une paroi d'une cavité de la bande de moulage.

Selon un exemple, le matériau de bouchage s'étend au moins en partie entre la face interne et la face externe de la bande de moulage.

Selon un exemple, le matériau de bouchage est une résine.

Selon un exemple, le matériau de bouchage étant au moins en partie agencé dans une cavité, le matériau de bouchage agencé entre la face interne et la face externe de la bande de moulage, présente une forme complémentaire d'une partie au moins d'un volume interne de la cavité.

Selon un exemple, le matériau de bouchage étant au moins en partie agencé dans une cavité, selon une vue en coupe selon un plan perpendiculaire à la direction machine et/ou selon une vue en coupe selon un plan perpendiculaire à la direction transverse, la hauteur du matériau de bouchage agencé entre la face interne et la face externe de la bande de moulage est supérieure à la somme des hauteurs du matériau de bouchage en dehors des faces interne et externe de la bande de moulage.

Selon un exemple, le matériau de bouchage est fixé à la bande de moulage, par exemple de manière à former un élément d'un seul tenant formé par la bande de moulage et le matériau de bouchage. Selon un exemple, la bande de moulage et le matériau de bouchage sont fixés chimiquement et/ou mécaniquement entre eux.

Selon un exemple, les éléments de retenue comportent chacun une tige et une tête, la tête étant formée par deux ailes qui sont opposées et qui s'étendent de part et d'autre de la tige selon une même direction, ou la tête s'étend tout autour de la tige sur 360°.

Selon un exemple, le matériau de bouchage s'étend sur la face interne et/ou sur la face externe de la bande de moulage.

Selon un exemple, le matériau de bouchage comprend un polymère et/ou un composé métallique et/ou un alliage et/ou un composite, le composite comprenant des éléments de renforts tels que des particules et/ou fibres et/ou filaments et le matériau de bouchage étant différent du matériau de la bande de moulage.

Selon un exemple, le matériau de bouchage comprend un polymère, en particulier un polymère thermoplastique et/ou thermodurcissable et/ou un élastomère, par exemple une résine, plus particulièrement une résine réticulée, notamment réticulées par ultraviolet et/ou par voie thermique et/ou chimique et/ou physique et/ou radicalaire.

Selon un exemple, le matériau de bouchage est suffisamment stable pour conserver son intégrité lors de l'utilisation de la bande de moulage, à savoir entre des températures comprises entre 10° et 300°C.

Selon un exemple, le matériau de bouchage comprend au moins l'un des composés parmi la liste suivante : résine et/ou un mastic, plus particulièrement :
- une résine à base d'époxy et/ou acrylique et/ou polyester et/ou polyuréthane et/ou silicone,
- une mastic à base d'époxy et/ou acrylique et/ou polyester et/ou polyuréthane et/ou silicone.

Selon un exemple, une partie de l'ensemble desdites cavités sont au moins partiellement obturées par le matériau de bouchage, de manière à présenter au moins deux zones disjointes remplies de matériau de bouchage dans chacune desdites cavités.

Selon un exemple, une partie desdites cavités sont au moins partiellement obturées par le matériau de bouchage, de manière à présenter dans chacune desdites cavités, une zone avec le matériau de bouchage et une zone dépourvue de matériau de bouchage. Lesdites cavités étant traversantes, la zone dépourvue de matériau de bouchage est typiquement traversante. Le matériau de bouchage permet alors ainsi de diminuer la section des cavités traversantes.

Selon un exemple, les cavités de moulage sont agencées de manière à former un motif sur la bande de moulage, typiquement un motif régulier. On entend par régulier le fait que le motif se répète dans la direction machine. En variante de réalisation, les cavités de moulage sont agencées de manière à former plusieurs motifs différents sur la bande de moulage, typiquement des motifs réguliers, par exemple, des motifs qui se répètent en alternance ou non sur la bande de moulage et dans la direction machine.

Selon un exemple, la bande de moulage, par exemple dans une zone de motif, comprend un nombre de cavités/cm selon la direction machine et/ou la direction transverse supérieur à 2 cavités/cm, plus précisément supérieur à 5 cavités/cm, en particulier supérieur à 10 cavités/cm, et inférieur à 1 500 cavités/cm, plus précisément inférieur 1 000 cavités/cm et par exemple inférieur à 700 cavités/cm, plus particulièrement inférieur à 400 cavités/cm, encore plus particulièrement inférieur à 200 cavités/cm.

Selon un exemple, la bande de moulage, par exemple dans une zone de motif, comprend un taux d'ouverture compris entre 2% et 45%, en particulier compris entre 3% et 30%, plus particulièrement entre 4% et 20%. Ainsi, le nombre d'éléments de retenue à démouler est limité pour permettre un démoulage plus aisé et/ou une force de démoulage plus faible. La bande de moulage comprend dans une zone, selon une vue perpendiculaire à la bande de moulage, une surface élémentaire de répétition comprenant au moins une portion de cavité de moulage. Le taux d'ouverture de la bande de moulage est calculé par le rapport de : (la surface de la cavité de moulage dans la surface élémentaire de répétition) / (la surface élémentaire de répétition). Pour éviter des erreurs de parallaxe, le taux d'ouverture est préférentiellement mesuré sur une zone réduite de la bande de moulage.

Selon un exemple, les cavités de moulage sont agencées de manière à former un ou plusieurs motifs disjoints. Selon un exemple, les cavités de moulage sont agencées de manière à former un motif qui se répète sur la bande de moulage, par exemple entre 4 et 600 répétitions du motif, ou par exemple entre 20 et 200 répétitions du motif.

Selon un exemple, la bande de moulage présente une épaisseur comprise entre 50 et 500 microns, de préférence entre 70 et 350 microns, dans certains cas compris entre 100 microns et 250 microns.

Selon un exemple, parmi les cavités, entre 10% et 90% du nombre total de cavités de la bande de moulage sont au moins partiellement obturées par le matériau de bouchage, de préférence entre 20% et 80%.

Selon un exemple, la bande de moulage présente un périmètre compris entre 200mm et 3 000mm, en particulier entre 400 mm et 2000 mm.

Selon un exemple, la bande de moulage présente une densité de cavités comprise entre 50 et 3000 par cm², en particulier entre 100 et 800 cm².

Selon un exemple, la bande de moulage présente des bordures s'étendant le long de ses extrémités selon la direction machine, et les cavités se trouvant à une distance selon la direction transverse comprise entre 2 et 5mm, dans certains cas entre 1 et 5mm, dans d'autre cas comprise entre 2 et 7mm ou encore entre 1 et 10mm, des bordures de la bande de moulage s'étendant selon la direction machine sont obturées.

Selon un exemple, chaque motif présente au moins une ligne et/ou au moins une colonne comprenant au moins deux groupes de cavités de moulage disjointes séparés par une zone de cavités bouchées.

Le présent exposé concerne également un procédé de préparation d'un tel dispositif de moulage, dans lequel
- on fournit une bande de moulage formée dans un premier matériau et adaptée pour être montée sur un support, la bande de moulage s'étendant selon une direction machine, présentant une largeur définie selon une direction transverse perpendiculaire à la direction machine, et une épaisseur selon une direction perpendiculaire à la direction machine et à la direction transverse, la bande de moulage présentant une face interne et une face externe,
- on applique un matériau de bouchage sur la bande de moulage, de manière à obturer une partie des cavités de la bande de moulage.

Selon un exemple, lors de l'étape d'application de matériau de bouchage, on obture toutes les cavités de la bande de moulage, puis on réalise une étape de retrait (ou suppression) du matériau de bouchage d'une partie des cavités pour définir des cavités de moulage.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 est une vue schématique d'un dispositif de retenue selon un aspect de l'invention.
[Fig. 2] La figure 2 est une vue en coupe de la figure 1.
[Fig. 3] La figure 3 est une représentation d'un dispositif de moulage.
[Fig. 4] La figure 4 est une représentation d'une variante d'un dispositif de moulage.
[Fig. 5] La figure 5 est une vue détaillée de la figure 4.
[Fig. 6] La figure 6 est une représentation d'un dispositif de retenue.
[Fig. 7] La figure 7 est une vue détaillée de la figure 6.
[Fig. 8] La figure 8 représente schématiquement un motif d'éléments de retenue ou de cavités.
[Fig. 9] La figure 9 représente schématiquement un autre motif d'éléments de retenue ou de cavités.
[Fig. 10] La figure 10 représente schématiquement un autre motif d'éléments de retenue ou de cavités.
[Fig. 11] La figure 11 représente schématiquement un autre motif d'éléments de retenue ou de cavités.
[Fig. 12] La figure 12 représente schématiquement un autre motif d'éléments de retenue ou de cavités.
[Fig. 13] La figure 13 représente schématiquement un autre motif d'éléments de retenue ou de cavités.

Sur l'ensemble des figures, les éléments en commun sont repérés par des références numériques identiques.

### Description des modes de réalisation

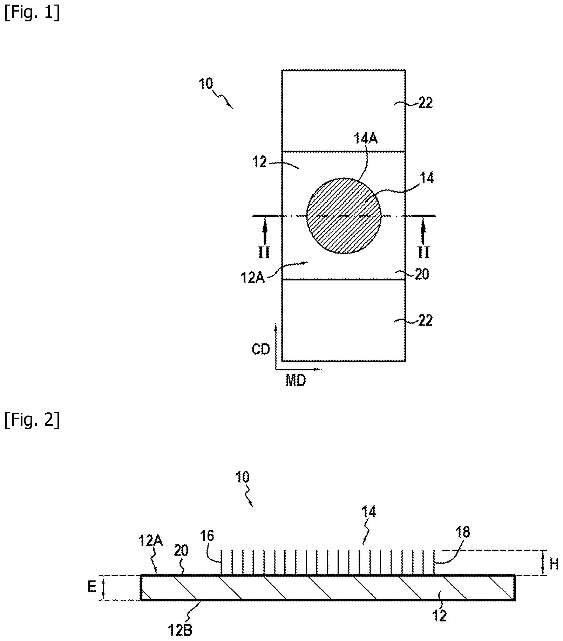

La figure 1 représente schématiquement un dispositif de retenue 10 comprenant une base 12, qui est typiquement continue, et un motif 14 en forme de disque plein. Comme représenté sur la figure 2, la base 12 comporte une face supérieure 12A et une face inférieure 12B et le motif 14 est formé par une pluralité d'éléments de retenue 16 s'étendant depuis la face supérieure 12A de la base 12. Par base continue, on entend que la base est dépourvue d'ouvertures traversantes ou d'évidements dans les zones ne présentant pas d'éléments de retenue. La base 12 présente typiquement une largeur constante.

Chaque élément de retenue 16 comprend une tige 18. La base 12, en particulier la face supérieure 12A de la base 12, comprend également des zones 20 dépourvues d'éléments de retenue 16. Pour des raisons de simplification, les éléments de retenue 16 sont représentés par des hachures sur la figure 1. Dans le mode de réalisation de la figure 1, le dispositif de retenue 10 comprend une bande 22 de non-tissé (ou de tissé). Par exemple, la base 12 peut être surmoulée sur la bande 22 de non-tissé. La base 12 peut être également collée sur la bande 22 de non-tissé. Le motif 14 peut être un motif unique (comme représenté sur la figure 1) ou un motif 14 répétitif. Le motif 14 est typiquement délimité par un contour fermé 14A.

La base 12 et les éléments de retenue 16 sont typiquement réalisés dans une matière thermoplastique, par exemple une matière thermoplastique non élastique. La base 12 et les éléments de retenue 16 sont réalisés de telle sorte qu'ils peuvent être étirés sous l'effet d'une force d'étirement exercée selon une direction donnée et sans reprendre sensiblement leur forme et leurs dimensions initiales après relâchement de cette force d'étirement, dans certains cas la base se rompt sous l'effet d'une force d'étirement. Il s'agit par exemple d'une base et les éléments de retenue qui conservent une déformation résiduelle ou rémanence après élongation et relâchement (déformation résiduelle aussi appelée « permanent set » ou « SET ») supérieure ou égale à 20%, de préférence supérieure ou égale à 30%, de sa dimension initiale (avant élongation) pour un allongement de 100% de sa dimension initiale, à température ambiante (23°C - degré Celsius).

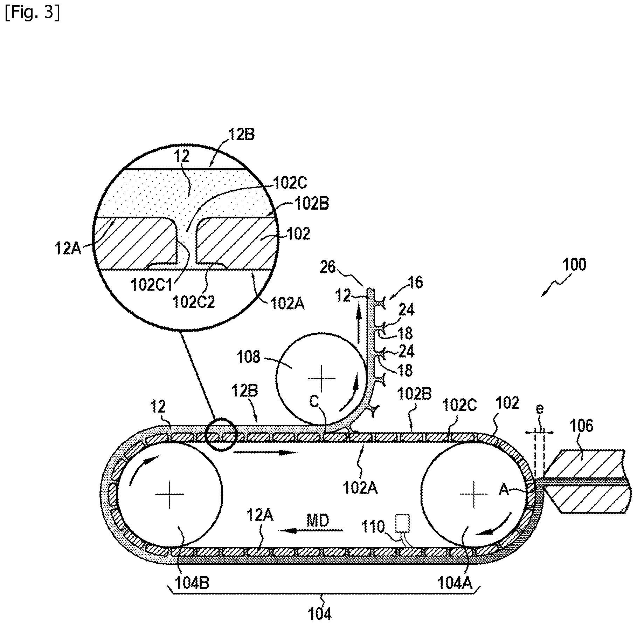

Le dispositif de retenue 10 peut être fabriqué par exemple au moyen d'un appareillage 100 tel que représenté sur la figure 3. L'appareillage 100 permet de fabriquer un ruban 26 pour dispositif de retenue, le ruban 26 peut ensuite être découpé ou subdivisé en une pluralité de dispositifs de retenue 10. Le ruban 26 comprend la base 12 qui est ici continue, et une pluralité d'éléments de retenue 16. Dans le mode de réalisation de la figure 3, les éléments de retenue 16 sont des crochets, chaque crochet comprenant une tige 18 surmontée d'une tête 24.

L'appareillage 100 tel que représenté comprend une bande de moulage 102 positionnée sur des moyens d'entrainement en rotation 104 comprenant ici deux rouleaux 104A, 104B, un moyen de distribution de matière 106, par exemple un injecteur, adapté pour réaliser une injection de matière de moulage par exemple thermoplastique.

L'ensemble formé par la bande de moulage 102 et les moyens d'entrainement en rotation 104 forme ainsi un dispositif de moulage.

On entend par direction machine MD la direction de déplacement de la bande de moulage 102 dans l'appareillage 100 lors de la fabrication du dispositif de retenue, conformément au sigle anglais pour « Machine Direction », et par direction transverse CD, conformément au sigle anglais pour « Cross Direction », la direction perpendiculaire à la direction machine MD. On repère ainsi sur les différentes figures ces directions.

L'exemple illustré comprenant deux rouleaux 104A, 104B n'est pas limitatif, le nombre et l'agencement du ou des rouleaux peuvent varier notamment afin de s'adapter à la longueur de la bande de moulage 102 et aux différents postes de l'appareillage. On pourrait par exemple utiliser trois rouleaux ou encore un seul de telle sorte que la bande de moulage est agencée sur la périphérie du seul rouleau pour former un manchon ou « sleeve » ou un « screen » selon les désignations en langue anglaise communément employées. En particulier, un seul des deux rouleaux peut être entrainé en rotation par des moyens motorisés, par exemple le rouleau 104A, l'autre rouleau 104B étant libre, c'est à dire sans moyens motorisés, et entrainé en rotation via la bande de moulage, elle-même entrainée par le rouleau 104A.

La bande de moulage 102 telle que présentée comprend une face interne 102A et une face externe 102B, la face interne 102A étant au contact des moyens d'entrainement en rotation 104.

Le moyen de distribution de matière 106 est disposé de manière à injecter de la matière de moulage sur la face externe 102B de la bande de moulage 102.

Plus précisément, le moyen de distribution de matière 106 est disposé en regard de la bande de moulage 102, espacé de la bande de moulage 102 de manière à définir un entrefer « e » indiqué sur la figure 3. On repère par la référence A la limite de la matière injectée sur la face externe 102B de la bande de moulage 102, correspondant au front arrière de la matière injectée sur la bande de moulage 102 par rapport au sens de déplacement de la bande de moulage 102.

La bande de moulage 102 est munie d'une pluralité de cavités 102C permettant la réalisation d'éléments de retenue ou de préformes en vue de la réalisation d'éléments de retenue, par exemple par une opération ultérieure de calandrage ou toute autre opération adaptée. On désignera dans l'ensemble de la description par la dénomination éléments de retenue des éléments de retenue ou des préformes en vue de la réalisation d'éléments de retenue destinés à former une fermeture auto agrippant de type crochets-crochets ou crochets-boucles.

Les cavités 102C sont chacune typiquement formées de manière à définir une tige 102C1 s'étendant depuis la face externe 102B vers la face interne 102A de la bande de moulage 102 et une tête 102C2 s'étendant entre la tige 102C1 et la face interne 102A de la bande de moulage 102.

La bande de moulage 102 présente typiquement une épaisseur comprise entre 50 et 500 microns, ou typiquement entre 70 et 350 microns.

La bande de moulage 102 est typiquement continue, et présente typiquement un périmètre compris entre 200 mm et 3000 mm, ou typiquement entre 400 mm et 2000 mm.

La bande de moulage 102 présente une densité de cavités 102C comprise entre 50 et 3000 cavités par cm², ou typiquement entre 100 et 800 cavités par cm².

On comprend ainsi que l'agencement des cavités 102C détermine l'agencement des éléments de retenue sur le dispositif de retenue formé à l'aide de l'appareillage 100. Les cavités 102C sont typiquement disposées en lignes et en colonnes, lesdites lignes et colonnes étant agencées respectivement selon la direction transverse CD et la direction machine MD. Chaque ligne et colonne est composée d'une ou plusieurs cavités 102C, le cas échéant alignées selon la direction transverse CD et la direction machine MD respectivement.

Au sein d'une même ligne, les cavités 102C successives sont typiquement espacées régulièrement selon un intervalle transverse. Au sein d'une même colonne, les cavités 102C successives sont typiquement espacées régulièrement selon un intervalle machine. En variante, lesdites lignes sont espacées régulièrement selon un premier intervalle transverse et selon un deuxième intervalle transverse, le deuxième intervalle transverse n'étant pas un multiple entier du premier intervalle transverse et le premier intervalle transverse étant inférieur au deuxième intervalle transverse, et/ou lesdites colonnes sont espacées régulièrement selon un premier intervalle machine et selon un deuxième intervalle machine, le deuxième intervalle machine n'étant pas un multiple entier du premier intervalle machine et le premier intervalle machine étant inférieur au deuxième intervalle machine.

Les lignes et colonnes de cavités 102C peuvent être alignées, ou disposées en quinconce. Plus précisément, les différentes cavités 102C peuvent être disposées de manière à être alignées selon la direction transverse CD et selon la direction machine MD, ou être décalées de manière à former un motif en quinconce ou en nid d'abeille, deux lignes ou deux colonnes successives étant alors décalées respectivement selon la direction transverse et selon la direction machine, d'un pas correspondant à la moitié de l'intervalle transverse ou à la moitié de l'intervalle machine respectivement.

Comme on le verra par la suite, il en résulte que les éléments de retenue 16 formés à l'aide de ces cavités 102C sont disposés selon un agencement en colonnes et en lignes, respectivement selon une direction primaire et une direction secondaire, correspondant typiquement à la direction machine MD et à la direction transverse CD.

Dans l'exemple illustré, les têtes 24 des cavités 102C débouchent sur la face interne 102A de la bande de moulage 102. Les cavités 102C sont donc traversantes. Un tel mode de réalisation n'est pas limitatif, les cavités 102C peuvent également être borgnes, et donc ne pas déboucher de la face interne 102A de la bande de moulage 102 et/ou les cavités 102C peuvent ne comporter qu'une tige 102C1.

Les portions des cavités 102C formant les tiges 102C1 s'étendent typiquement selon une direction perpendiculaire à la face externe 102B de la bande de moulage 102. Les portions des cavités 102C formant les tiges 102C1 ont typiquement une géométrie de rotation autour d'un axe perpendiculaire à la face externe 102B de la bande de moulage 102, ou une géométrie présentant un plan de symétrie s'étendant selon une direction parallèle au sens de défilement de la bande de moulage 102 et/ou selon une direction perpendiculaire au sens de défilement de la bande de moulage 102.

Les portions des cavités 102C formant les têtes 102C2 s'étendent typiquement radialement ou transversalement par rapport à un axe perpendiculaire à la face externe 102B de la bande de moulage 102, et peuvent présenter une symétrie de rotation autour de cet axe perpendiculaire à la face externe 102B de la bande de moulage 102. Les portions des cavités 102C formant les têtes 102C2 présentent typiquement une forme sensiblement tronconique ou hexaédrique.

Les portions des cavités 102C formant les têtes 102C2 peuvent être linéaires ou incurvées, par exemple pour former des portions incurvées vers la face interne 102A ou vers la face externe 102B de la bande de moulage 102 s'étendant depuis les portions des cavités 102C formant les tiges 102C1. La bande de moulage peut en outre présenter une forme telle que celles décrites dans les demandes de brevets WO0213647 A2 et/ou WO0050208 A2.

Les portions des cavités 102C formant les têtes 102C2 peuvent présenter une épaisseur constante ou variable.

Dans l'exemple représenté sur les figures, les portions des cavités 102C formant les têtes 102C2 s'étendent radialement autour des portions des cavités 102C formant les tiges 102C1, et présentent une forme générale de disque.

La bande de moulage 102 peut présenter sur sa face interne 102A ou sur sa face externe 102B une texturation particulière telle que des rainures, réseau de gorges ou réseau de passage formant évent ou picots, ou être sensiblement lisse.

La bande de moulage 102 peut être formée par une superposition de plusieurs bandes, et n'est donc pas nécessairement monobloc ou monomatière. La bande de moulage 102 peut être composée d'une ou plusieurs matière ou composite, typiquement métallique du type Ni, Cu, Inox, ou tout autre matériau adapté.

Le moyen de distribution de matière 106 est typiquement disposé de manière à réaliser l'injection de matériau de moulage dans la bande de moulage 102 en une section de la bande de moulage 102 où cette dernière est en appui contre un rouleau d'entrainement, en l'occurrence le rouleau d'entrainement 104A dans l'exemple représenté sur la figure 3. Le rouleau d'entrainement forme alors un fond pour les cavités 102C.

Dans le cas où l'injection de matériau de moulage est réalisée alors que la bande de moulage 102 n'est pas en appui contre un rouleau d'entrainement, le moyen de distribution de matière 106 peut alors comprendre un socle disposé de l'autre côté de la bande de moulage 102, de sorte que la face interne 102A de la bande de moulage 102 soit en appui contre la base lorsque l'injection de matière est réalisée, le socle formant alors un fond pour les cavités 102C de la bande de moulage 102.

L'utilisation d'une bande de moulage 102 associée à des moyens d'entrainement 104 par rapport à l'utilisation de moyens de formation conventionnels tels que des rouleaux dans lesquels sont directement réalisées des cavités de moulage est avantageuse pour plusieurs raisons.

L'utilisation d'une bande de moulage 102 est notamment intéressante en termes de modularité. La bande de moulage peut en effet être retirée et remplacée facilement des moyens d'entrainement, contrairement à un rouleau massif pour lequel les opérations de démontage et remontage sont particulièrement complexes à réaliser. Un tel avantage s'observe particulièrement lorsque les deux rouleaux 104A, 104B sont fixés à un bâti d'un seul et même côté, laissant l'extrémité de l'autre côté libre pour introduire/retirer la bande de moulage. Un moyen de guidage de la bande de moulage peut également être utilisé afin d'en faciliter l'introduction et/ou le retrait.

De plus, la réalisation d'une bande de moulage est fortement simplifiée par rapport à la réalisation d'un rouleau comprenant des cavités de moulage. De tels rouleaux sont en effet typiquement réalisés par empilement de tranches successives, nécessitant donc de multiples opérations d'usinage et entrainant des contraintes importantes lors de l'assemblage et à chaque changement de référence de crochets et présente une masse importante nécessitant le maintien de ces rouleaux par leurs deux extrémités, ce qui complexifie par conséquent leur remplacement.

Les cavités 102C dans la bande de moulage 102 peuvent être réalisées par un procédé d'attaque chimique ou par utilisation d'un laser aux endroits où l'on souhaite former des éléments de retenue 16. On peut également envisager de réaliser la bande de moulage 102 avec des cavités 102C réparties uniformément sur toute la bande de moulage 102 et de venir ensuite boucher les cavités 102C aux endroits où l'on souhaite former des zones 20 dépourvues d'éléments de retenue 16.

Plus précisément, afin de pouvoir définir différentes configurations dans l'agencement des éléments de retenue et ainsi définir un ruban présentant des éléments de retenue agencés de manière à former des motifs, la bande de moulage 102 présente des cavités 102C présentant une configuration similaire à celle des éléments de retenue. Les cavités 102C sont formées directement par la bande de moulage 102, dans la matière formant la bande de moulage 102.

Or, on comprend que la réalisation de cavités 102C dans la bande de moulage 102 est complexe à réaliser, plus particulièrement dans le cas d'une répartition non uniforme.

Les cavités 102C peuvent ainsi être réalisées de manière uniforme sur la bande de moulage 102, puis une partie des cavités ainsi formées peuvent être au moins partiellement obturées, tandis qu'une autre partie des cavités ne sont pas obturées. Une telle obturation totale ou partielle d'une partie des cavités 102C permet ainsi de définir deux sous ensemble des cavités : des cavités fonctionnelles et des cavités non fonctionnelles.

Par cavités fonctionnelles, on désigne des cavités pouvant ainsi être remplies de matière de moulage de manière à former des éléments de retenue ou des préformes d'éléments de retenue.

Par cavités non fonctionnelles, on désigne des cavités ayant été totalement ou partiellement obturées, de sorte que la matière de moulage ne peut pas y pénétrer afin de former des éléments de retenue ou des préformes d'éléments de retenue. On comprend toutefois qu'en raison d'un possible retrait de matière, les cavités non fonctionnelles peuvent entrainer des irrégularités lors de la formation du dispositif de retenue, ces irrégularités ayant toutefois une dimension moindre par rapport aux éléments de retenue ou aux préformes formées par les cavités fonctionnelles, typiquement une dimension selon une direction perpendiculaire à la face supérieure 12A de la base 12 au moins 5 fois inférieure. Dans certains cas, les cavités 102C de la bande de moulage 102, selon au moins une vue en coupe perpendiculaire à la face interne, dans cette vue comprend une dimension W1 au niveau de la face interne de la bande de moulage supérieure à une dimension W2 au niveau de la face externe de la bande de moulage pour permettre d'améliorer les valeurs de pelage. Dans d'autres cas, les cavités 102C de la bande de moulage 102, selon au moins une vue en coupe perpendiculaire à la face interne, dans cette vue comprend une dimension W1 au niveau de la face interne de la bande de moulage inférieure à une dimension W2 au niveau de la face externe de la bande de moulage pour améliorer le démoulage. Le ratio entre W1/W2 est par exemple compris entre 0,7 et 1,2, en particulier entre 0,8 et 1,2 pour avoir un bon compromis entre force de pelage et aisance de démoulage.

Le matériau employé pour réaliser une telle obturation totale ou partielle d'une partie des cavités 102C est un matériau de bouchage, typiquement distinct du matériau d'injection (ou matériau de moulage). Le matériau de bouchage est par exemple une résine. Le matériau de bouchage peut être formé en une couche, ou de plusieurs couches déposées, typiquement entre 2 et 20 couches par exemple déposées successivement.

Le matériau de bouchage peut s'étendre sur la face externe et/ou sur la face interne de la bande de moulage. Selon un exemple, une partie de l'ensemble des cavités 102C sont au moins partiellement obturées par le matériau de bouchage, de manière à présenter au moins deux zones disjointes remplies de matériau de bouchage dans chacune desdites cavités. Selon un exemple, une partie des cavités 102C sont au moins partiellement obturées par le matériau de bouchage, de manière à présenter dans chacune des cavités 102C, une zone avec le matériau de bouchage et une zone dépourvue de matériau de bouchage. Les cavités 102C étant traversantes, la zone dépourvue de matériau de bouchage est typiquement traversante. Le matériau de bouchage permet alors ainsi de diminuer la section des cavités traversantes. Le matériau de bouchage est alors par exemple partiellement retiré par ablation laser.

Selon un exemple, entre 10% et 90%, ou entre 20% et 80% du nombre total de cavités 102C de la bande de moulage 102 sont au moins partiellement obturées.

Selon un exemple, les cavités 102C se trouvant à une distance selon la direction transverse CD inférieure ou égale à 10 mm des bordures de la bande de moulage 102 s'étendant selon la direction machine MD sont obturées.

Dans certains cas, les cavités 102 C se trouvant à une distance selon la direction transverse CD comprise entre 2 et 5mm, dans certains cas entre 1 et 5mm, dans d'autre cas comprise entre 2 et 7mm ou encore entre 1 mm et 10mm, des bordures de la bande de moulage 102 s'étendant selon la direction machine MD sont obturées.

En variante, on peut dans une première étape obturer l'ensemble des cavités 102C de la bande de moulage, puis dans une seconde étape retirer le matériau de bouchage d'une partie desdites cavités 102C.

De manière alternative, les cavités 102C peuvent être réalisées par perçage, notamment par perçage laser, dans une bande de moulage 102 initialement dépourvue de cavités 102C. Un tel procédé permet ainsi de ne réaliser les cavités 102C qu'aux emplacements souhaités.

De manière alternative, la bande de moulage 102 peut être formée par un procédé de croissance différenciée, par exemple par électroformage ou « electroforming » bien connue du domaine de l'impression, en positionnant des dépôts de résine de manière localisée afin de prévenir la croissance d'un matériau métallique, par exemple du nickel, dans certaines zones qui définiront ainsi des cavités. De manière alternative, la bande de moulage 102 peut être formée par un procédé de décroissance différenciée, par exemple par un procédé de « etching » selon la désignation communément employée en langue anglaise.

Les cavités 102C peuvent présenter des formes identiques ou distinctes.

Comme on le verra par la suite, les cavités 102C peuvent être agencées selon différents motifs.

On repère sur la figure 3 par la référence C la séparation entre le ruban 26 et la bande de moulage 102, ce point correspondant par exemple au niveau à partir duquel la base 12 du ruban 26 n'est plus au contact de la bande de moulage 102. On pourra prévoir que la bande de moulage 102 embarre sur le rouleau de démoulage 108, c'est-à-dire que le rouleau de démoulage 108 forme un levier dans la bande de moulage 102 pour faciliter le démoulage des préformes et/ou crochets.

Dans l'exemple représenté, les cavités 102C de la bande de moulage 102 sont traversantes. L'appareillage peut alors comprendre un élément, tel qu'une racle 110, positionné de manière à racler la face interne 102A de la bande de moulage 102 pour retirer au besoin le matériau de moulage excédentaire. On entend par injection, l'action de mise en forme d'une matière de moulage par voie fondue, par exemple, la distribution, l'apport, le moulage, l'injection, l'extrusion.

L'appareillage présenté précédemment et le procédé associé peuvent également présenter des moyens et une étape d'association d'une bande 22 de non-tissé (ou de tissé) à la base 12.

Une telle association d'une bande 22 sur une base 12 comprenant des éléments de retenue 16 est typiquement réalisée au moyen d'un adhésif, ou via une fusion de la base ou de la bande et/ou ancrage mécanique.

Afin de réaliser une telle solidarisation d'une bande 22, par exemple en non-tissé, à la base 12 du dispositif de retenue 10, l'appareillage 100 proposé peut comprendre des moyens d'entrainement de bande 22, adaptés pour réaliser une alimentation en bande et pour appliquer la bande contre la face inférieure 12B de la base 12 en aval du moyen de distribution de matière 106.

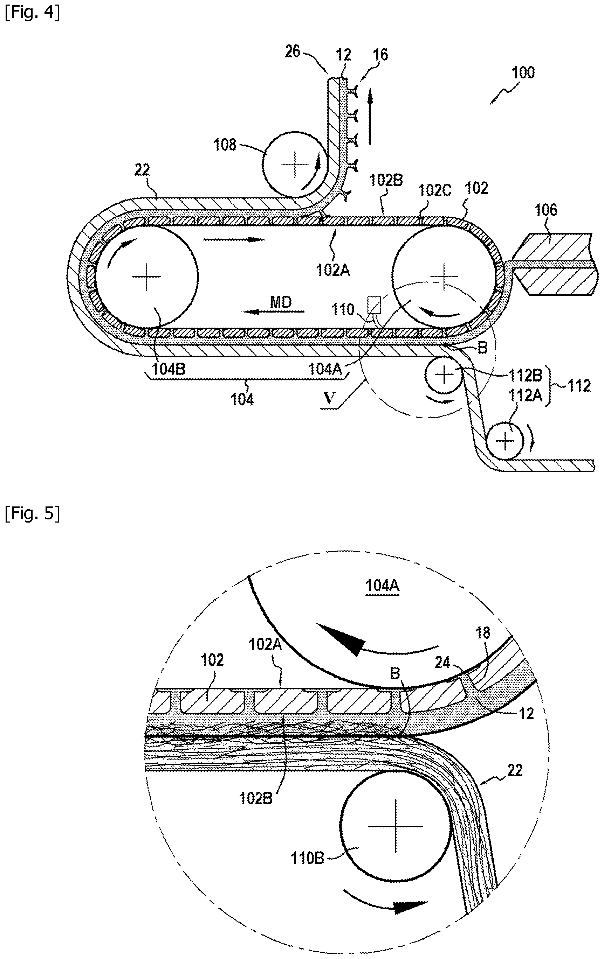

On représente schématiquement sur les figures 4 et 5 un exemple d'appareillage 100 comprenant de tels moyens.

L'appareillage tel qu'illustré est similaire à celui présenté précédemment en référence à la figure 3 ; les éléments en commun ne sont donc pas décrits à nouveau ici.

Comme on le voit sur les figures 4 et 5, l'appareillage tel que présenté comprend des moyens d'entrainement de bande 112, ici constitués de deux rouleaux 112A, 112B, configurés pour réaliser une alimentation en bande 22 en aval du moyen de distribution de matière 106.

La bande 22 est typiquement une couche de matériau non-tissé, un film thermoplastique, un film élastique ou un film composite, ou encore un ensemble de fibres et/ou filaments consolidé thermiquement. La bande 22 est par exemple une nappe de fibres et/ou filaments.

Dans l'exemple représenté sur les figures 4 et 5, la bande est représentée comme étant une couche de matériau non-tissé.

Les moyens d'entrainement de substrat 110 sont configurés pour alimenter l'appareillage en bande 22, et appliquer cette bande 22 contre la face inférieure 12B de la base 12 en aval du moyen de distribution de matière 106.

Les moyens d'entrainement de substrat 110 sont configurés de manière à ce que cette application soit réalisée préalablement à la solidification de la base 12. Ainsi, cette application entraine une pénétration au moins partielle de la bande 22 au-delà d'un plan défini par la face inférieure 12B de la base 12. On repère par la référence B sur les figures le point de mise en contact entre la base 12 et la bande 22.

Plus précisément, la face inférieure 12B de la base 12 est sensiblement plane, et définit un plan. L'application du substrat contre cette face entraine une pénétration de portions de la bande 22, par exemple de fibres et/ou filaments de la couche de matériau non-tissé dans le cas où la bande 22 est une couche de matériau non-tissé au sein de la base 12, traversant de ce fait la face inférieure 12B de la base 12.

Dans la mesure où une telle application est réalisée préalablement à la solidification de la base 12, il n'est pas nécessaire de chauffer la base 12 et/ou la bande 22 afin de réaliser une telle liaison.

A titre d'exemple, en considérant une base 12 réalisée en polypropylène, l'application du substrat contre la face inférieure 12B de la base 12 est typiquement réalisée lorsque la face inférieure 12B de la base 12 présente une température comprise entre la température de fusion du matériau et la température de ramollissement Vicat B du matériau la constituant moins 30°C (degré Celsius) ou encore entre la température de fusion du matériau la constituant et la température de ramollissement Vicat A du matériau la constituant. Plus particulièrement, lorsque la base comprend un matériau à base de polypropylène, la face inférieure 12B de la base 12 présente une température comprise entre 75°C et 150°C, typiquement de l'orde de 105°C, cette température étant typiquement mesurée au moyen d'une caméra infrarouge ou laser. On entend par température de ramollissement VICAT la température obtenue selon l'une des méthodes décrites dans les normes ISO 306 ou ASTM D 1525 avec une vitesse de chauffe de 50°C/h et une charge normalisée de 50N pour le VICAT B et une charge normalisée de 10N pour le VICAT A.

La bande 22 peut être appliquée de manière uniforme ou non uniforme contre la face inférieure 12B de la base 12.

La liaison réalisée entre la bande 22 et la base 12 peut être réalisée de manière uniforme ou non uniforme.

Dans le cas où la bande 22 est un ensemble de fibres et/ou filaments consolidés thermiquement, la liaison avec la base 12 est également réalisée par pénétration dans la base 12 d'une partie des fibres et/ou filaments de la bande 22.

Dans le cas où la bande 22 est un ensemble de fibres et/ou filaments consolidés, par exemple consolidé thermiquement, un film thermoplastique, un film élastique ou un film composite, il peut résulter alors de la liaison avec la base un phénomène de retassure de la base 12 lors de son refroidissement, cette retassure favorisant la surface de liaison entre le substrat et la base du ruban. Cette retassure est sans impact sur l'aspect visuel pour l'utilisateur final.

Dans le cas où la bande 22 est une couche de matériau non-tissé, le démoulage des crochets est réalisé de manière aisée même avec un non-tissé dont le grammage est inférieur à 80 g/m² (masse de matière en gramme par mètre carré de non-tissé). A titre d'exemple, le grammage du non-tissé peut être compris entre 5 g/m² et 120 g/m², ou encore entre 25 g/m² et 100 g/m², ou encore entre 10 g/m² et 70 g/m².

Dans le cas où la bande 22 est une couche de matériau non-tissé, l'appareillage peut comprendre un dispositif de calandrage en amont des moyens d'entrainement de substrat 112, permettant ainsi de réaliser une étape de calandrage localement ou non de la couche de matériau non-tissé préalablement à son application contre la base 12.

Ce mode de solidarisation d'une bande 12 à une base 12 comprenant des éléments de retenue 16 est notamment avantageux en ce qu'il n'entraine pas une déformation de la base 12, et permet donc avantageusement de conserver la forme de la base 12 obtenue lors de l'étape d'injection, et notamment de conserver les bords droits pouvant être obtenus via le procédé et l'appareillage décrits précédemment.

Ce mode de solidarisation d'un substrat à un ruban peut être appliqué à un procédé de formation d'un ruban tel que décrit précédemment, ou plus généralement à tout autre procédé de formation d'un ruban comprenant des éléments de retenue tels que des crochets.

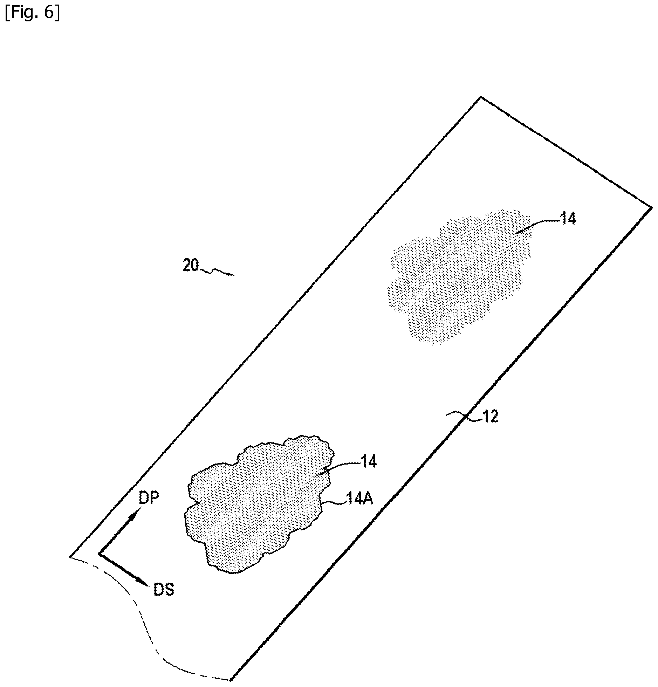

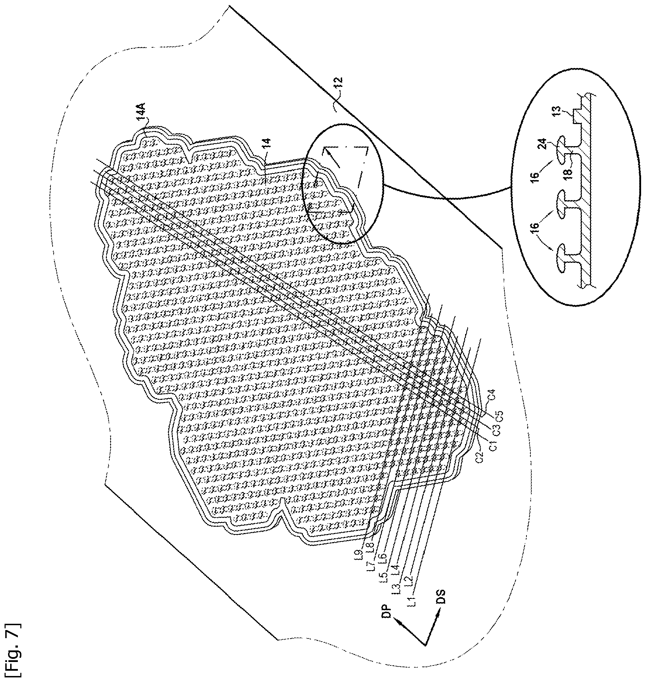

Les figures 6 et 7 présentent respectivement une vue d'une portion de ruban 26 obtenue au moyen de l'appareillage 100 de la figure 4, et un motif 14 pris isolément.

La portion de ruban 26 telle que présentée présente plusieurs motifs 14 disjoints, chaque motif 14 étant formé d'une pluralité d'éléments de retenue.

Chaque motif 14 est entouré d'une région dépourvue d'éléments de retenue, définissant ainsi des régions planes ou sensiblement planes sur la face supérieure 12A de la base 12.

Les motifs 14 sont formés par une succession de lignes et de colonnes d'éléments de retenue, lesdites colonnes et lignes étant agencées respectivement selon une direction primaire DP et une direction secondaire DS. Les lignes et colonnes sont chacune formées d'un ou plusieurs éléments de retenue, le cas échéant alignés respectivement selon la direction secondaire DS ou la direction primaire DP. Une ligne d'éléments de retenue comprend typiquement entre 1 et 1000 éléments de retenue, plus particulièrement entre 2 et 500 éléments de retenue. Une colonne d'éléments de retenue comprend typiquement entre 1 et 1000 éléments de retenue, plus particulièrement entre 2 et 750 éléments de retenue.

La base 12 présente typiquement une largeur constante, la largeur de la base 12 étant typiquement mesurée selon la direction primaire DP ou la direction secondaire DS.

La direction primaire DP correspond typiquement à la direction machine MD de la bande de moulage 102 décrite précédemment, et la direction secondaire DS correspond typiquement à la direction transverse CD de la bande de moulage 102 décrite précédemment.

Les différentes lignes et colonnes sont typiquement espacées régulièrement selon un intervalle secondaire et un intervalle primaire respectivement. L'intervalle primaire et l'intervalle secondaire peuvent être égaux ou distincts. En variante, lesdites lignes sont espacées régulièrement selon un premier intervalle secondaire et selon un deuxième intervalle secondaire, le deuxième intervalle secondaire n'étant pas un multiple entier du premier intervalle secondaire et le premier intervalle secondaire étant inférieur au deuxième intervalle secondaire, et/ou lesdites colonnes sont espacées régulièrement selon un premier intervalle primaire et selon un deuxième intervalle primaire, le deuxième intervalle primaire n'étant pas un multiple entier du premier intervalle primaire et le premier intervalle primaire étant inférieur au deuxième intervalle primaire.

Chaque motif 14 est typiquement entouré d'une région de la face supérieure de la base dépourvue d'éléments de retenue, ladite région présentant une dimension strictement supérieure à deux fois l'intervalle primaire selon la direction primaire DP, et/ou strictement supérieure à deux fois l'intervalle secondaire selon la direction secondaire DS.

Les éléments de retenue 16 définissant les lignes et colonnes peuvent être alignés ou agencés en quinconce, ce qui résulte notamment de la configuration des cavités 102C de la bande de moulage 102 employée pour la réalisation du dispositif de retenue comme déjà décrit précédemment.

Chaque motif 14 est typiquement entouré d'une région de la face supérieure 12A de la base 12 dépourvue d'éléments de retenue, et est typiquement situé à une distance au moins égale à 1,5 mm, dans certains cas au moins égal à 2,5 mm d'une bordure de la face supérieure 12A de la base 12. Par bordure de la base 12, on entend une extrémité de la base 12, par exemple selon la direction principale DS ou selon la direction secondaire DS.

On repère sur la figure 7 différentes lignes et colonnes d'éléments de retenue.

On repère sur cette figure les lignes L1 à L9 qui s'étendent successivement depuis une extrémité du motif 12 selon la direction primaire DP, et les colonnes C1 à C5 qui s'étendent au sein du motif 12.

On dénombre les éléments de retenue 16 sur chacune des lignes L1 à L9 pour un motif donné.

Dans le cas du motif représenté sur la figure 7, les lignes présentent les nombres d'éléments de retenue suivant : L1 : 4, L2 : 8, L3 : 9, L4 : 10, L5 : 11, L6 : 12 ; L7 : 13, L8 : 12, L9 : 17.

De la même manière, on dénombre les éléments de retenue 16 sur chacune des colonnes C1 à C5 pour le motif représenté sur la figure 7 : C1 : 27, C2 : 26, C3 : 27, C4 : 26, C5 : 25.

Le motif 12 tel que proposé présente ainsi au moins deux lignes et/ou deux colonnes ayant des nombres distincts d'éléments de retenue. Plus généralement, le motif tel que proposé présente au moins X lignes et/ou X colonnes d'éléments de retenue présentant des nombres distincts d'éléments de retenue, avec X égal à 2, ou encore dans certains cas égal à 3, ou 4, ou 5, ou plus généralement X est un entier naturel compris entre Xmin et Xmax, où Xmin peut être par exemple égal à 2 ou 3 ou 4 ou 5 ou 6 ou 7 ou 8 ou 9 ou 10 ou 12 ou 15 ou 20, et Xmax peut par exemple être égal à 500 ou 450 ou 400 ou 350 ou 300 ou 250 ou 200 ou 150 ou 100 ou 50.

Le motif ainsi formé peut présenter différentes formes, contrairement aux motifs continus et uniformes communément réalisés pour des éléments de retenue.

Par ailleurs, pour un motif donné, au moins deux lignes et/ou colonnes présentent des nombres d'éléments de retenue distincts, la différence entre les nombres d'éléments de retenue desdites deux lignes ou deux colonnes étant supérieure ou égale à 1, ou plus précisément supérieure ou égale à 2, ou encore supérieure ou égale à 3 ou 4 ou 5.

Dans l'exemple représenté sur la figure 7, en considérant les lignes L1 à L9 et les colonnes C1 à C5, le motif représenté comprend ainsi :
- 3 colonnes ayant des nombres d'éléments de retenue distincts, la différence entre les nombres d'éléments de retenue étant ici supérieur ou égal à 1 (colonnes C1, C2 et C5 par exemple).
- 2 colonnes ayant des nombres d'éléments de retenue distincts, la différence entre les nombres d'éléments de retenue étant ici égal à 2 (colonnes C1 et C5 par exemple).
- 8 lignes ayant des nombres d'éléments de retenue distincts, la différence entre les nombres d'éléments de retenue étant ici supérieur ou égal à 1 (L1, L2, L3, L4, L5, L6, L7, L9 par exemple).
- 2 lignes ayant des nombres d'éléments de retenue distincts, la différence entre les nombre d'éléments de retenue étant ici égal à 4 (L1 et L2 par exemple, ou L2 et L8).

De plus, pour chaque paire de lignes ou de colonnes agencées successivement, la variation du nombre d'éléments de retenue entre lesdites lignes ou colonnes de ladite paire est typiquement inférieure ou égale à 10, ou encore inférieure ou égale à 15.

Plus généralement, pour chaque paire de lignes ou paire de colonnes agencées successivement, la variation du nombre d'éléments de retenue entre lesdites lignes ou colonnes de ladite paire est typiquement inférieure ou égale à 40%, 30% ou 15% du nombre maximum d'éléments de retenue pour les lignes du motif. Pour chaque paire de colonnes agencées successivement, la variation du nombre d'éléments de retenue entre lesdites lignes ou colonnes de ladite paire est typiquement inférieure ou égale à 40%, 30% ou 15% du nombre maximum d'éléments de retenue pour les colonnes du motif. De telles caractéristiques permettent de moduler l'effort nécessaire pour le désengagement du dispositif de retenue lorsque les éléments de retenue sont engagés avec des éléments complémentaires tels que des éléments de retenue ou un matériau non tissé. Un tel produit est également plus facile à réaliser notamment plus facile à démouler du dispositif de moulage.

Par ailleurs, dans le mode de réalisation représenté sur la figure 7, le motif 12 est bordé par une nervure 13 formant ici un contour continu autour du motif 14a. Dans l'exemple illustré, la nervure 13 présente une section rectangulaire. On comprend cependant qu'une nervure 13 bordant le motif 14a peut présenter une section quelconque, et peut être continue ou discontinue.

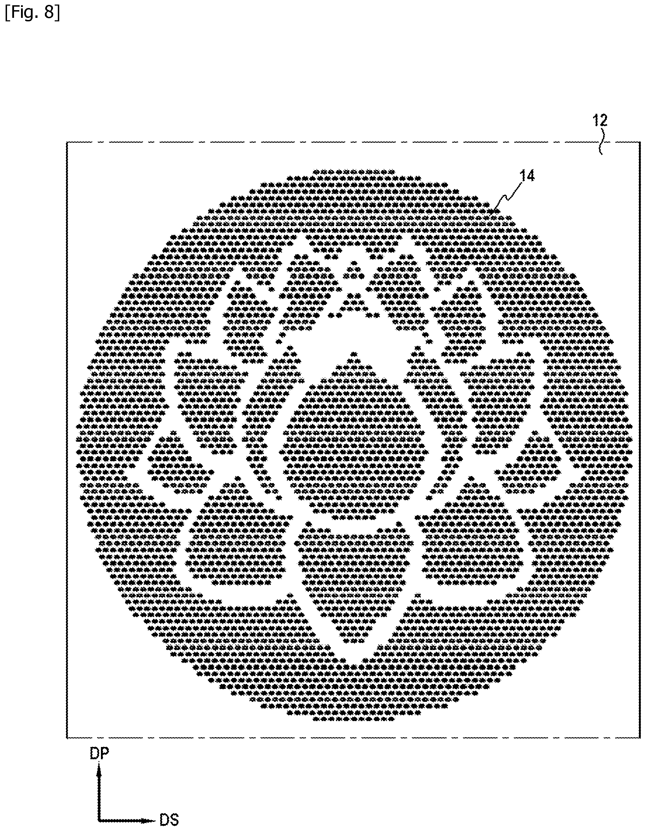

Les figures 8 à 11 présentent d'autres exemples de motifs pouvant être formés par les éléments de retenue et donc par les cavités employées pour la formation des éléments de retenue.

On indique sur ces figures la direction primaire DP et la direction secondaire DS.

Les différentes relations entre les nombres d'éléments de retenue ou de cavités pour les différentes lignes et colonnes du motif déjà décrites en référence à la figure 7 s'appliquent également pour les motifs représentés sur les figures 8 à 11.

Les différents motifs présentés sont ici inscrits dans un contour externe, ici un cercle, ayant par exemple un diamètre de l'ordre de 24mm, ou plus généralement compris entre 10 mm et 45 mm. Les motifs sont ici formés par des zones dépourvues d'éléments de retenue au sein du contour externe. On comprend que la géométrie du contour externe peut varier, et n'est pas limitée à un cercle.

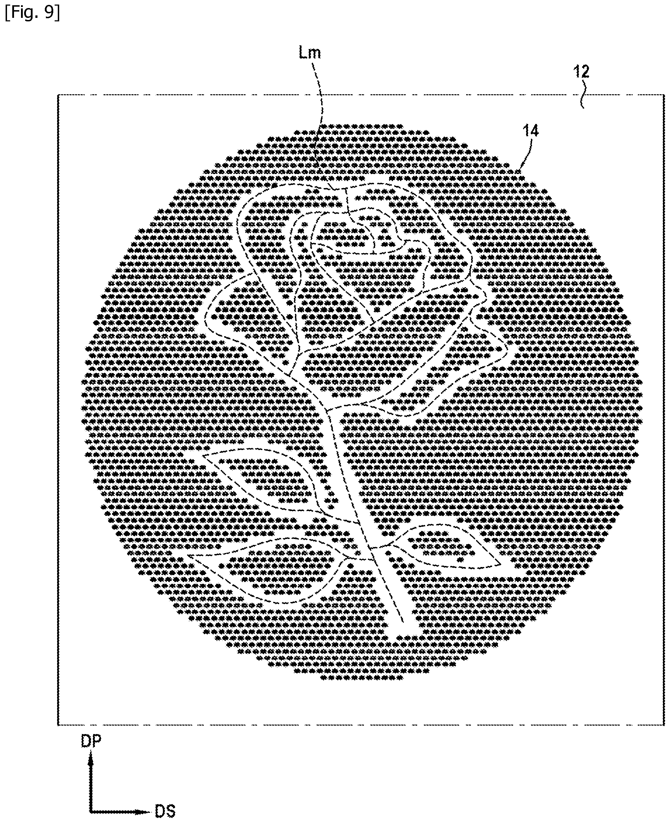

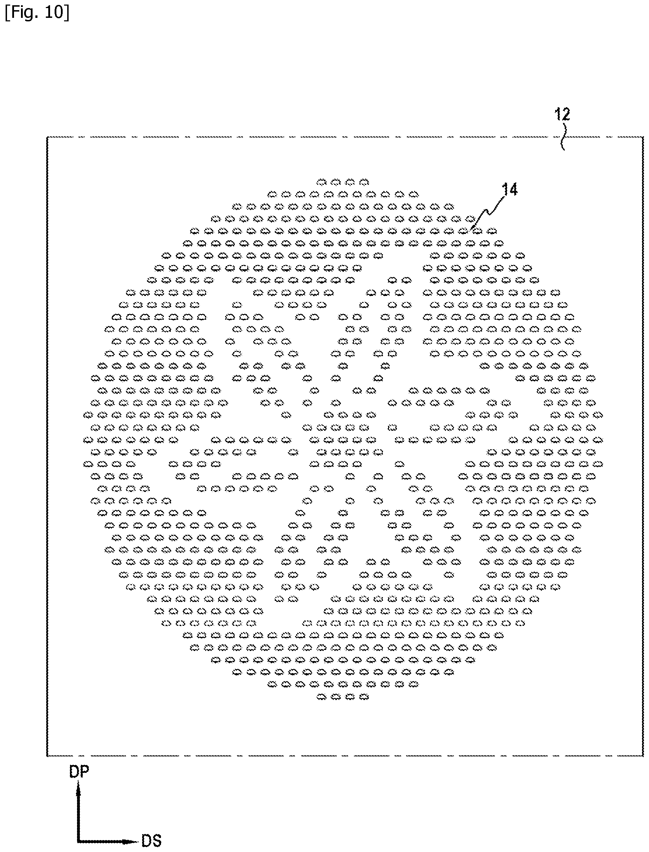

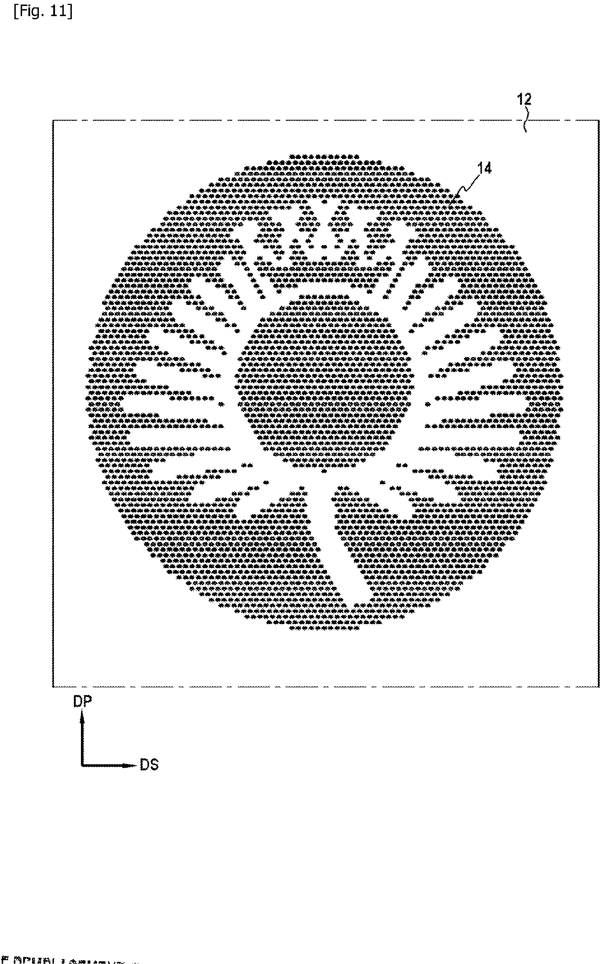

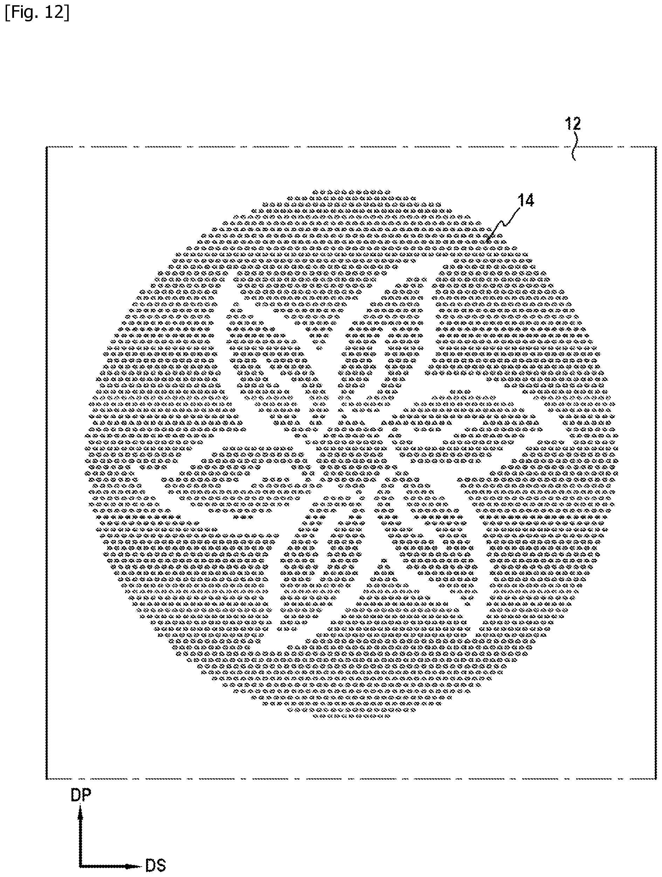

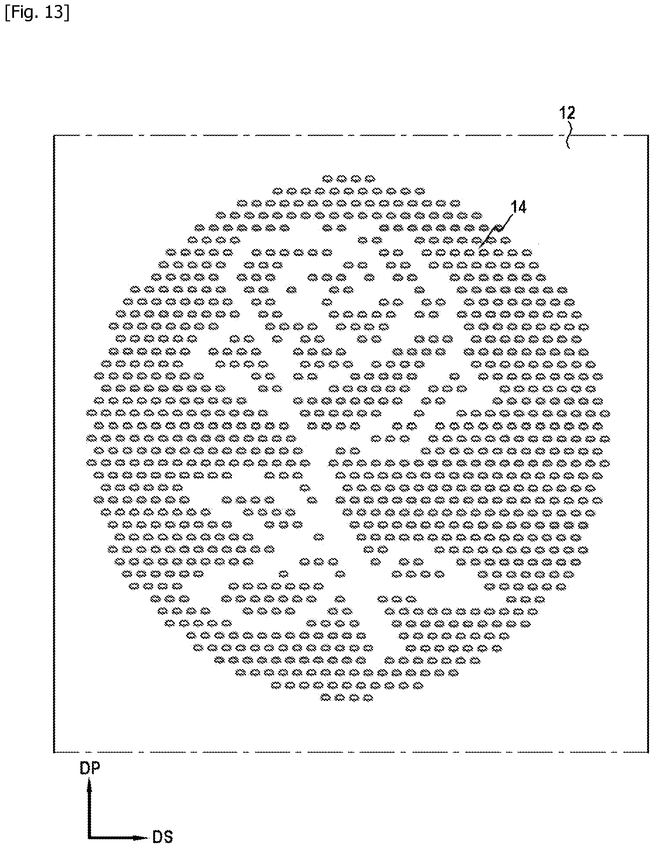

Dans le cas du motif représenté sur la figure 8, les zones dépourvues d'éléments de retenue définissent un motif du type fleur de lotus. Dans le cas du motif représenté sur la figure 9, les zones dépourvues d'éléments de retenue définissent un motif représentant une rose. Dans le cas du motif représenté sur la figure 10, les zones dépourvues d'éléments de retenue définissent un motif représentant une fleur. Dans le cas du motif représenté sur la figure 11, les zones dépourvues d'éléments de retenue définissent un motif représentant une fleur de bardane. La figure 12 est une variante de la figure 10. La figure 13 est une variante de la figure 9.

Comme on le voit sur ces figures, la densité des éléments de retenue (ou des cavités) peut varier. Les figures 8, 9, 11 et 12 présentent ainsi des motifs réalisés avec une densité d'éléments de retenue (ou de cavités) de l'ordre de 1093 éléments de retenue (ou cavités) /cm², tandis que les figures 10 et 13 présente des motifs réalisés avec une densité d'éléments de retenue (ou de cavités) de l'ordre de 273 éléments de retenue (ou cavités) /cm².

Comme on le voit sur ces figures 8 à 13, pour chaque motif, au moins une ligne et/ou au moins une colonne comprend au moins deux groupes d'éléments de retenue (ou de cavités) disjoints, séparés par une zone dépourvue d'éléments de retenue ou de cavités.

Par zone dépourvue d'éléments de retenue ou de cavités, on comprend une zone dans laquelle, en respectant le pas des éléments de retenue ou des cavités, un élément de retenue ou une cavité aurait normalement été présent(e).

En considérant que les lignes et colonnes d'éléments de retenue sont espacées régulièrement selon un intervalle secondaire et un intervalle primaire respectivement, la au moins une zone dépourvue d'éléments de retenue comprise dans la zone délimitée par le contour externe de chaque motif présente une dimension selon la direction primaire DP strictement supérieure à deux fois l'intervalle primaire, et une dimension selon la direction secondaire DS strictement supérieure à deux fois l'intervalle secondaire.

De la même manière, en considérant que les lignes et colonnes de cavités sont espacées régulièrement selon un intervalle transverse et un intervalle machine respectivement, la au moins une zone dépourvue d'éléments de retenue comprise dans la zone délimitée par le contour externe de chaque motif présente une dimension selon la direction machine MD strictement supérieure à deux fois l'intervalle machine, et une dimension selon la direction transverse CD strictement supérieure à deux fois l'intervalle transverse.

Selon un exemple, chaque motif, le rapport entre la surface des zones dépourvues d'élément de retenue (ou de cavités) contenues dans le contour externe et la surface comprenant des éléments de retenue (ou des cavités) est inférieur à 1. La surface du motif est définie comme étant la surface couverte par des cercles de rayon correspondant au pas moyen et dont le centre de chaque cercle est positionné respectivement, en vue du dessus, sur le centre des éléments de retenue (ou cavités) et la circonférence de chaque cercle passe par le centre d'au moins un élément de retenue (ou cavité) adjacent(e). Le pas moyen peut correspondre à la distance séparant deux éléments de retenue (ou cavités) adjacent(e)s. La au moins une zone dépourvue d'éléments de retenue est la surface non couverte par la surface de motif.

Selon un exemple, pour chaque motif, au moins une, ou par exemple chaque, zone dépourvue d'éléments de retenue (ou de cavités) incluse dans le motif présente une largeur et une longueur, de sorte que le rapport entre la longueur et la largeur soit strictement supérieur à 1,2, en particulier strictement supérieure à 1,5.

Selon un exemple, le (ou chaque) motif étant délimité par un contour externe, et le (ou chaque) motif comprenant, dans la zone délimitée par son contour externe, au moins une zone dépourvue d'éléments de retenue (ou de cavités), le contour interne présente au moins une portion locale de forme allongée définissant une ligne médiane locale agencée à une distance du contour interne local inférieure à 20%, en particulier inférieure à 15%, de la dimension du motif selon la direction primaire et/ou la direction secondaire, ou de manière alternative ou complémentaire à une distance du contour interne local inférieure à 10mm, ou inférieure à 5mm, en particulier inférieure 3mm, plus particulièrement inférieure à 2mm, encore plus particulièrement inférieure à 1mm et supérieure ( ou strictement supérieure) à un pas moyen des éléments de retenue dans le motif considéré. Une telle ligne médiane Lm est représentée sur la figure 9. Une zone circulaire dépourvue d'éléments de retenue ne présente pas une médiane au sens du présent document. Ainsi, le dispositif de retenue présente une accroche maximisée tout en permettant une représentation plus détaillée et précise du motif. La ligne médiane locale comprend des portions droites et/courbes. La longueur de la ligne médiane du au moins un contour interne est typiquement supérieure à 10mm, ou par exemple supérieure à 12 mm. La somme des longueurs des lignes médianes des contours internes d'un motif est typiquement supérieure à 12 mm, par exemple supérieure à 15 mm et/ou typiquement inférieure à 600 mm, par exemple inférieure à 400 mm, plus particulièrement inférieure à 200mm.

En complément ou de manière indépendante des différentes caractéristiques décrites précédemment, les éléments de retenue 16 peuvent être réalisés de manière à présenter chacune une tige s'étendant depuis la base 12, et une tête s'étendant à l'extrémité de la tige opposée à la base. Les éléments de retenue 16 sont alors typiquement réalisés de manière à ce que pour un motif 14 donné, la dimension de la tête des éléments de retenue du motif diminue entre une première extrémité du motif et une seconde extrémité du motif.

Plus précisément, en considérant un motif donné, typiquement pour chaque motif d'un ruban, on définit une première direction du motif, qui peut par exemple être la direction principale DP ou la direction secondaire DS, et on détermine les éléments de retenue 16 formant une première extrémité dudit motif et une seconde extrémité dudit motif selon ladite première direction. Les éléments de retenue 16 présentent chacun une tête ayant une dimension maximale mesurée selon une seconde direction. Les éléments de retenue 16 formant la première extrémité du motif présentent une tête ayant une première dimension maximale. Les éléments de retenue formant la seconde extrémité du motif présentent une tête ayant une seconde dimension maximale. La seconde dimension maximale est strictement inférieure à la première dimension maximale. Les éléments de retenue 16 formant la première extrémité et les éléments de retenue 16 formant une deuxième extrémité sont agencés sur une même colonne ou ligne. La première direction est la direction MD. La première direction étant la direction MD, le sens de la première extrémité vers la deuxième extrémité est le sens MD.

Selon un mode de réalisation, la dimension maximale de la tête des éléments de retenue est décroissante, typiquement strictement décroissante depuis la première extrémité jusqu'à la seconde extrémité du motif.

Selon un exemple, le rapport de la seconde dimension maximale sur la première dimension maximale est compris entre 1,01 et 1,60, en particulier entre 1,01 et 1,35, plus particulier entre 1,02 et 1,15, dans certains cas entre 1,03 et 1,12.

Une telle variation de la dimension maximale des têtes des éléments de retenue permet de moduler l'effort nécessaire pour désengager les éléments de retenue en considérant un effort de pelage depuis une première extrémité du motif vers une seconde extrémité du motif.

Le dispositif de retenue présente typiquement une force de pelage à 180° qui est supérieure strictement à 0,02 N, dans certains cas supérieur strictement à 0,1N selon la direction primaire DP et/ou selon la direction secondaire DS.

La méthode « Pelage 180° » est une méthode qui permet de mesurer la force de pelage, c'est-à-dire la force pour séparer un ensemble (ici le dispositif de de retenue) et une zone d'application. Cette méthode est décrite ci-dessous.

Conditionnement des échantillons - Les échantillons à tester sont conditionnés pendant 2 h (heure) à 23°C+/-2°C avecune humidité relative de 50%+/-5%.

Préparation du dispositif de retenue - Le dispositif de retenue se présente généralement sous forme d'un ruban dont la longueur est dans la direction primaire DP ou la direction secondaire DS. Une partie du ruban selon la direction primaire DP ou la direction secondaire DS est collée sur un papier de 80 g/cm² et un rouleau de 2 kg (kilogramme) est appliqué ou passé en rotation sur le dispositif de retenue est dans un sens et puis dans l'autre (aller-retour) sur toute la longueur de la partie du ruban. Le papier et le dispositif de retenue sont découpés à l'aide d'un outil de découpe en bandelettes de 25,4 mm (millimètre) de largeur dans la direction primaire DP ou la direction secondaire DS à une vitesse d'environ 700 mm/min (millimètre par minute). Chaque bandelette de papier présente une longueur de 210 mm et la bande anti-glissement est disposée au centre de cette bandelette.

Préparation de la zone d'application - L'échantillon de la zone d'application présente, par exemple en fonction de la taille du dispositif de retenue, une largeur de 50 mm dans la direction primaire DP ou la direction secondaire DS et la longueur est au maximum de 200 mm et l'échantillon est coupé en deux selon la longueur.

Assemblage - La bandelette est disposée sur l'échantillon de la zone d'application de sorte que le dispositif de retenue est soit centré sur l'échantillon de la zone d'application. Le rouleau de 2 kg (kilogramme) est appliqué ou passé en rotation sur la bandelette dans un sens et puis dans l'autre (aller-retour) sur toute la longueur de la bandelette à une vitesse d'environ 700 mm/min. L'échantillon de la zone d'application est disposé dans une pince d'une potence, le côté coupé étant dans la pince et un poids de 1 kg est suspendu à la partie inférieure de la bandelette pendant 10 s (seconde). Le poids est ensuite retiré. Cette étape permet de s'assurer de l'assemblage du dispositif de retenue et de l'échantillon de la zone d'application.

Mesure - L'ensemble est ensuite disposé dans une machine d'essai en traction comprenant une cellule de mesure de 100 N (newton). La bandelette est insérée dans la mâchoire supérieure (mobile). On met la lecture de la cellule de mesure de force à zéro. On insère l'échantillon de la zone d'application dans la mâchoire inférieure (fixe) et on crée une légère tension. La force doit être comprise entre 0,02 N et 0,05 N. Lors de la mise en place, les mâchoires sont écartées l'une de l'autre de 50 mm. L'ensemble est centré entre les deux mâchoires. Le test est réalisé à déplacement constant à une vitesse de 305 mm/min et la course d'essai est de 50 mm. Cette course d'essai est adaptée en fonction de la largeur du dispositif de retenue à tester.

Afin de réaliser un ruban 26 muni de tels éléments de retenue 16, on comprend que la bande de moulage 102 employée pour l'appareillage 100 présente des cavités 102C ayant une configuration similaire à celle des éléments de retenue.

Ainsi, on comprend que pour former un motif donné d'éléments de retenue, la bande de moulage 102 employée présente des cavités 102C fonctionnelles disposées selon un motif similaire. On assimilera ici les cavités non fonctionnelles à une absence de cavités.

Plus généralement, la bande de moulage 102 présentant une pluralité de cavités 102C agencées en lignes et en colonnes s'étendant respectivement selon la direction transverse CD et la direction machine MD, lesdites cavités 102C débouchant sur la face externe de la bande de moulage 102.

Une ligne de cavités comprend typiquement entre 1 et 1000 cavités. Une colonne de cavités comprend typiquement entre 1 et 1000 cavités.

Les cavités 102C sont agencées de manière à former des motifs, typiquement disjoints, sur la face externe de la bande de moulage 102. Chaque motif est formé par une pluralité de lignes et de colonnes de cavités 102C.

Les différents motifs sont typiquement disjoints.

La bande de moulage peut présenter un ou plusieurs motifs, qui peuvent être répétés sur la bande de moulage.

Les différentes lignes et colonnes sont typiquement espacées régulièrement selon un intervalle transverse et un intervalle machine respectivement. L'intervalle transverse et l'intervalle machine peuvent être égaux ou distincts. Selon un autre exemple, lesdites lignes sont espacées régulièrement selon un premier intervalle transverse et selon un deuxième intervalle transverse, le deuxième intervalle transverse n'étant pas un multiple entier du premier intervalle transverse et le premier intervalle transverse étant inférieur au deuxième intervalle transverse, et/ou lesdites colonnes sont espacées régulièrement selon un premier intervalle machine et selon un deuxième intervalle machine, le deuxième intervalle machine n'étant pas un multiple entier du premier intervalle machine et le premier intervalle machine étant inférieur au deuxième intervalle machine.

Chaque motif est typiquement entouré d'une région de la face externe de la bande de moulage dépourvue d'éléments de retenue, ladite région présentant une dimension strictement supérieure à deux fois l'intervalle machine selon la direction machine MD, et/ou strictement supérieure à deux fois l'intervalle transverse selon la direction transverse CD.

Les cavités 102C définissant les lignes et colonnes peuvent être alignées ou agencées en quinconce.

Chaque motif est typiquement entouré d'une région de la face externe de la bande de moulage dépourvue de cavités, et est typiquement situé à une distance au moins égale à 1,5 mm, dans certains cas au moins égal à 2,5 mm d'une bordure de la face externe de la bande de moulage. Par bordure de la bande de moulage, on entend une extrémité de la bande de moulage, par exemple selon la direction machine MD ou selon la direction transverse CD.

Comme pour les éléments de retenue, les motifs formés par les cavités présentent ainsi au moins deux lignes et/ou deux colonnes ayant des nombres distincts de cavités. Plus généralement, le motif tel que proposé présente au moins Y lignes et/ou Y colonnes de cavités présentant des nombres distincts de cavités, avec Y égal à 2, ou dans certains cas égal à 3 ou 4 ou 5, ou plus généralement Y est un entier naturel compris entre Ymin et Ymax, où Ymin peut être par exemple égal à 2 ou 3 ou 4 ou 5 ou 6 ou 7 ou 8 ou 9 ou 10 ou 12 ou 15 ou 20, et Ymax peut par exemple être égal à 500 ou 450 ou 400 ou 350 ou 300 ou 250 ou 200 ou 150 ou 100 ou 50.

Par ailleurs, pour un motif donné, au moins deux lignes et/ou colonnes présentent des nombres de cavités distincts, la différence entre les nombres de cavités desdites deux lignes ou deux colonnes étant supérieure ou égale à 1, ou plus précisément supérieure ou égale à 2, ou encore supérieure ou égale à 3 ou 4 ou 5.

De plus, pour chaque paire de lignes ou de colonnes agencées successivement, la variation du nombre de cavités entre lesdites lignes ou colonnes de ladite paire est typiquement inférieure ou égale à 10, ou encore inférieure ou égale à 15.

Plus généralement, pour chaque paire de lignes agencées successivement, la variation du nombre de cavités entre lesdites lignes ou colonnes de ladite paire est typiquement inférieure ou égale à 40%, 30% ou 15% du nombre maximum de cavités pour les lignes du motif. Pour chaque paire de colonnes agencées successivement, la variation du nombre de cavités entre lesdites lignes ou colonnes de ladite paire est typiquement inférieure ou égale à 40%, 30% ou 15% du nombre maximum de cavités pour les colonnes du motif.

En variante de réalisation, le motif pourrait représenter d'autres formes, par exemple d'autres formes de fleur, telles qu'une marguerite, un chardon ou encore une fleur de coton ou encore par exemple un animal, un logo, un mot ou un « QR code ».

En variantes de réalisation des figures 6 à 13, le motif pourrait être orienté différemment par exemple d'un angle de 90 degrés.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif de retenue (10) comprenant :
- une base (12) présentant une face supérieure (12A) et une face inférieure (12B), la base (12) s'étendant selon une direction primaire (DP), présentant une largeur définie selon une direction secondaire (DS) perpendiculaire à la direction primaire (DP), et une épaisseur mesurée selon une direction perpendiculaire à la direction primaire (DP) et à la direction secondaire (DS),
- une pluralité d'éléments de retenue (16) s'étendant sur la face supérieure (12A) de la base (12), chaque élément de retenue (16) comprenant une tige (18), les éléments de retenue (16) étant formés d'une seule pièce avec la base (12), les éléments de retenue (16) étant agencés en lignes et en colonnes s'étendant respectivement selon la direction secondaire (DS) et la direction primaire (DP),
dans lequel
au moins X lignes et/ou X colonnes du dispositif de retenue présentent des nombres distincts d'éléments de retenue (16), où X est égal à 2
ladite pluralité d'éléments de retenue forme un ou plusieurs motifs disjoints, chaque motif étant formé d'une pluralité de lignes et de colonnes d'éléments de retenue, chaque motif étant délimité par un contour externe (14A), et dans lequel chaque motif comprend, dans la zone délimitée par son contour externe (14A), au moins une zone dépourvue d'éléments de retenue,
le dispositif étant **caractérisé en ce que**
pour chaque motif, au moins une zone dépourvue d'éléments de retenue (16) incluse dans le motif présente une largeur et une longueur, de sorte que le rapport entre la longueur et la largeur soit strictement supérieur à 1,2.

2. Dispositif de retenue (10) selon la revendication 1, dans lequel au moins deux lignes et/ou au moins deux colonnes du dispositif de retenue présentent un nombre d'éléments de retenue distinct, la différence entre les nombres d'éléments de retenue desdites au moins deux lignes et/ou au moins deux colonnes étant supérieure ou égale à 1, ou plus précisément, supérieure ou égale à 2.

3. Dispositif de retenue (10) selon l'une des revendications 1 ou 2, dans lequel pour chaque motif, chaque couple de lignes agencées successivement selon la direction primaire (DP) présente un nombre d'éléments de retenue dont la variation est inférieure ou égale à 10 éléments de retenue, en particulier est inférieure ou égale à 5 éléments de retenue.

4. Dispositif de retenue (10) selon l'une des revendications 1 ou 3, dans lequel pour chaque motif, chaque couple de colonnes agencées successivement selon la direction secondaire (DS) présente un nombre d'éléments de retenue (16) dont la variation est inférieure ou égale à 15 éléments de retenue (16), en particulier est inférieure ou égale à 5.

5. Dispositif de retenue (10) selon l'une des revendications 1 à 4, dans lequel chaque motif est entièrement entouré d'une région de la face supérieure (12A) de la base (12) dépourvue d'éléments de retenue (16), et est situé à une distance supérieure à 1,5 mm, en particulier supérieure à 2,5 mm à partir d'une bordure de la base (12), en particulier de toutes les bordures de la base (12).

6. Dispositif de retenue (10) selon la revendication 5, dans lequel chaque motif présente au moins une ligne et/ou au moins une colonne comprenant au moins deux groupes d'éléments de retenue (16) disjoints séparés par une zone dépourvue d'éléments de retenue (16).

7. Dispositif de retenue (10) selon l'une des revendications 1 ou 6, dans lequel pour chaque motif, a chaque zone dépourvue d'éléments de retenue (16) incluse dans le motif présente une largeur et une longueur, de sorte que le rapport entre la longueur et la largeur soit strictement supérieur à 1,2, ou en particulier strictement supérieur à 1,5.

8. Dispositif de retenue (10) selon l'une des revendications 1 à 7, dans lequel lesdites lignes et colonnes sont espacées régulièrement selon un intervalle secondaire et un intervalle primaire respectivement.

9. Dispositif de retenue (10) selon la revendication 8, dans lequel chaque motif est entièrement entouré d'une région de la face supérieure (12A) de la base (12) dépourvue d'éléments de retenue (16), ladite région présentant une dimension strictement supérieure à deux fois l'intervalle primaire selon la direction primaire (DP), et/ou strictement supérieure à deux fois l'intervalle secondaire selon la direction secondaire (DS).

10. Dispositif de retenue (10) selon la revendication 1 à 9, dans lequel ladite au moins une zone dépourvue d'éléments de retenue (16) comprise dans la zone délimitée par le contour externe (14A) de chaque motif présente une dimension selon la direction primaire (DP) strictement supérieure à deux fois l'intervalle primaire, et une dimension selon la direction secondaire (DS) strictement supérieure à deux fois l'intervalle secondaire.

11. Dispositif de retenue (10) selon l'une des revendications 1 à 10, dans lequel pour chaque motif, le rapport entre la surface des zones dépourvues d'élément de retenue (16) contenues dans le contour externe (14A) du motif et la surface comprenant des éléments de retenue (16) est inférieur à 1.

12. Dispositif de moulage (100) pour la formation d'un dispositif de retenue, par exemple selon l'une des revendications précédentes, ledit dispositif de moulage (100) comprenant une bande de moulage (102) adaptée pour être montée sur un support (104), ladite bande de moulage (102) s'étendant selon une direction machine (MD), présentant une largeur définie selon une direction transverse (CD) perpendiculaire à la direction machine (MD), et une épaisseur mesurée selon une direction perpendiculaire à la direction machine (MD) et à la direction transverse (CD), la bande de moulage présentant une face interne et une face externe opposées, ladite bande de moulage (102) présentant une pluralité de cavités (102C) agencées en lignes et en colonnes s'étendant respectivement selon la direction transverse (CD) et la direction machine (MD), lesdites cavités (102C) débouchant sur la face externe (102B) de la bande de moulage (102),
dans lequel
au moins Y lignes et/ou Y colonnes de cavités (102C) de la bande de moulage (102) présentent des nombres distincts de cavités (102C), où Y est égal à 2, ladite pluralité de cavités (102C) forme un ou plusieurs motifs disjoints, chaque motif étant formé d'une pluralité de lignes et de colonnes de cavités (102C), dans lequel chaque motif est délimité par un contour externe, et dans lequel chaque motif comprend, dans la zone délimitée par son contour externe, au moins une zone dépourvue de cavités (102C),
**caractérisé en ce que**
pour chaque motif, au moins une zone dépourvue de cavités (102C) incluse dans le motif présente une largeur et une longueur, de sorte que le rapport entre la longueur et la largeur soit strictement supérieur à 1,2.

13. Dispositif de moulage (100) selon la revendication 12, dans lequel au moins deux lignes et/ou au moins deux colonnes du dispositif de moulage (100) présentent un nombre distinct de cavités (102C), la différence entre les nombres de cavités (102C) desdites au moins deux lignes et/ou au moins deux colonnes étant supérieure ou égale à 1, ou plus précisément supérieure ou égale à 2.

14. Dispositif de moulage (100) selon l'une des revendications 12 ou 13, dans lequel pour chaque motif, chaque couple de lignes agencées successivement selon la direction machine (MD) présente un nombre de cavités dont la variation est inférieure ou égale à 40% du nombre maximum de cavités (102C) des lignes dudit couple de lignes de cavités (102C), typiquement inférieure ou égale à 30% ou à 15%.

15. Dispositif de moulage (100) selon l'une des revendications 12 à 14, dans lequel chaque motif présente au moins une ligne et/ou au moins une colonne comprenant au moins deux groupes de cavités (102C) disjoints séparés par une zone dépourvue de cavités (102C).

16. Dispositif de moulage (100) selon l'une des revendications 12 à 15, dans lequel pour chaque motif chaque, zone dépourvue de cavités (102C) incluse dans le motif présente une largeur et une longueur, de sorte que le rapport entre la longueur et la largeur soit strictement supérieur à 1,2, en particulier strictement supérieure à 1,5.

17. Dispositif de moulage (100) selon l'une des revendications 12 à 16, dans lequel lesdites colonnes et lignes sont espacées régulièrement selon un intervalle transverse et un intervalle machine respectivement.

18. Dispositif de moulage (100) selon la revendication 17, dans lequel chaque motif est entièrement entouré d'une région de la face externe (102B) de la bande de moulage (102) dépourvue de cavités (102C), ladite région présentant une dimension strictement supérieure à deux fois l'intervalle machine selon la direction machine (MD), et strictement supérieure à deux fois l'intervalle transverse selon la direction transverse (CD).

## Patentansprüche

1. Haltevorrichtung (10), umfassend:
- eine Basis (12), die eine obere Seite (12A) und eine untere Seite (12B) aufweist, wobei die Basis (12) sich entlang einer Primärrichtung (DP) erstreckt, eine Breite, die entlang einer Sekundärrichtung (DS) senkrecht zur Primärrichtung (DP) definiert ist, und eine Dicke aufweist, die entlang einer Richtung senkrecht zur Primärrichtung (DP) und zur Sekundärrichtung (DS) gemessen wird,
- mehrere Halteelemente (16), die sich auf der oberen Seite (12A) der Basis (12) erstrecken, wobei jedes Halteelement (16) einen Stab (18) umfasst, wobei die Halteelemente (16) einteilig mit der Basis (12) gebildet sind, wobei die Halteelemente (16) in Reihen und in Spalten angeordnet sind, die sich entlang der Sekundärrichtung (DS) beziehungsweise der Primärrichtung (DP) erstrecken,
wobei
mindestens X Reihen und/oder X Spalten der Haltevorrichtung verschiedene Anzahlen von Halteelementen (16) aufweisen, wobei X gleich 2 ist,
die mehreren Halteelemente ein oder mehrere getrennte Motive bilden,
jedes Motiv aus mehreren Reihen und Spalten von Halteelementen gebildet ist, wobei jedes Motiv durch einen äußeren Umriss (14A) abgegrenzt ist, und wobei
jedes Motiv in der Zone, die durch seinen äußeren Umriss (14A) abgegrenzt ist, mindestens eine Zone ohne Halteelemente umfasst,
wobei die Vorrichtung **dadurch gekennzeichnet ist, dass**
für jedes Motiv mindestens eine Zone ohne Halteelemente (16), die in dem Motiv beinhaltet ist, eine Breite und eine Länge aufweist, derart dass das Verhältnis zwischen der Länge und der Breite strikt größer als 1,2 ist.

2. Haltevorrichtung (10) nach Anspruch 1, wobei mindestens zwei Reihen und/oder mindestens zwei Spalten der Haltevorrichtung eine verschiedene Anzahl von Halteelementen aufweisen, wobei die Differenz zwischen den Anzahlen von Halteelementen der mindestens zwei Reihen und/oder mindestens zwei Spalten größer oder gleich 1, oder, genauer gesagt, größer oder gleich 2 ist.

3. Haltevorrichtung (10) nach einem der Ansprüche 1 oder 2, wobei für jedes Motiv jedes Paar aufeinanderfolgend entlang der Primärrichtung (DP) angeordneter Reihen eine Anzahl von Halteelementen aufweist, deren Veränderung kleiner oder gleich 10 Haltelemente ist, insbesondere kleiner oder gleich 5 Halteelemente ist.

4. Haltevorrichtung (10) nach einem der Ansprüche 1 oder 3, wobei für jedes Motiv jedes Paar aufeinanderfolgend entlang der Sekundärrichtung (DS) angeordneter Spalten eine Anzahl von Haltelementen (16) aufweist, deren Veränderung kleiner oder gleich 15 Haltelemente (16) ist, insbesondere kleiner oder gleich 5 ist.

5. Haltevorrichtung (10) nach einem der Ansprüche 1 bis 4, wobei jedes Motiv vollständig von einer Region der oberen Seite (12A) der Basis (12) ohne Haltelemente (16) umgeben ist und sich in einem Abstand von größer als 1,5 mm, insbesondere größer als 2,5 mm, ausgehend von einem Rand der Basis (12), insbesondere sämtlichen Rändern der Basis (12), befindet.

6. Haltevorrichtung (10) nach Anspruch 5, wobei jedes Motiv mindestens eine Reihe und/oder mindestens eine Spalte aufweist, die mindestens zwei Gruppen von getrennten Halteelementen (16) umfasst, die durch eine Zone ohne Haltelemente (16) abgesondert sind.

7. Haltevorrichtung (10) nach einem der Ansprüche 1 oder 6, wobei für jedes Motiv jede Zone ohne Halteelemente (16), die in dem Motiv beinhaltet ist, eine Breite und eine Länge aufweist, derart dass das Verhältnis zwischen der Länge und der Breite strikt größer als 1,2, oder insbesondere strikt größer als 1,5, ist.

8. Haltevorrichtung (10) nach einem der Ansprüche 1 bis 7, wobei die Reihen und Spalten regelmäßig gemäß einem Sekundärintervall beziehungsweise einem Primärintervall beabstandet sind.

9. Haltevorrichtung (10) nach Anspruch 8, wobei jedes Motiv vollständig von einer Region der oberen Seite (12A) der Basis (12) ohne Haltelemente (16) umgeben ist, wobei die Region eine Abmessung aufweist, die strikt größer als das Zweifache des Primärintervalls entlang der Primärrichtung (DP) und/oder strikt größer als das Zweifache des Sekundärintervalls entlang der Sekundärrichtung (DS) ist.

10. Haltevorrichtung (10) nach Anspruch 1 bis 9, wobei die mindestens eine Zone ohne Haltelemente (16), die in der Zone umfasst ist, die durch den äußeren Umriss (14A) von jedem Motiv abgegrenzt ist, eine Abmessung entlang der Primärrichtung (DP), die strikt größer als das Zweifache des Primärintervalls ist, und eine Abmessung entlang der Sekundärrichtung (DS) aufweist, die strikt größer als das Zweifache des Sekundärintervalls ist.

11. Haltevorrichtung (10) nach einem der Ansprüche 1 bis 10, wobei für jedes Motiv das Verhältnis zwischen der Oberfläche der Zonen ohne Haltelement (16), die in dem äußeren Umriss (14A) des Motivs enthalten sind, und der Oberfläche, die Halteelemente (16) umfasst, kleiner als 1 ist.

12. Formvorrichtung (100) zur Bildung einer Haltevorrichtung, zum Beispiel nach einem der vorhergehenden Ansprüche, wobei die Formvorrichtung (100) ein Formband (102) umfasst, das geeignet ist, auf einem Träger (104) montiert zu sein, wobei das Formband (102) sich entlang einer Maschinenrichtung (MD) erstreckt, eine Breite, die entlang einer Querrichtung (CD) senkrecht zur Maschinenrichtung (MD) definiert ist, und eine Dicke, gemessen entlang einer Richtung senkrecht zur Maschinenrichtung (MD) und zur Querrichtung (CD), aufweist, wobei das Formband eine innere Seite und eine entgegengesetzte äußere Seite aufweist,
wobei das Formband (102) mehrere Hohlräume (102C) aufweist, die in Reihen und in Spalten angeordnet sind, die sich entlang der Querrichtung (CD) beziehungsweise der Maschinenrichtung (MD) erstrecken, wobei die Hohlräume (102C) auf der äußeren Seite (102B) des Formbands (102) münden,
wobei
mindestens Y Reihen und/oder Y Spalten von Hohlräumen (102C) des Formbands (102) verschiedene Anzahlen von Hohlräumen (102C) aufweisen, wobei Y gleich 2 ist,
die mehreren Hohlräume (102C) ein oder mehrere getrennte Motive bilden,
jedes Motiv aus mehreren Reihen und Spalten von Hohlräumen (102C) gebildet ist, wobei jedes Motiv durch einen äußeren Umriss abgegrenzt ist, und wobei jedes Motiv in der Zone, die durch seinen äußeren Umriss abgegrenzt ist, mindestens eine Zone ohne Hohlräume (102C) umfasst,
**dadurch gekennzeichnet, dass**
für jedes Motiv mindestens eine Zone ohne Hohlräume (102C), die in dem Motiv beinhaltet ist, eine Breite und eine Länge aufweist, derart dass das Verhältnis zwischen der Länge und der Breite strikt größer als 1,2 ist.

13. Formvorrichtung (100) nach Anspruch 12, wobei mindestens zwei Reihen und/oder mindestens zwei Spalten der Formvorrichtung (100) eine verschiedene Anzahl von Hohlräumen (102C) aufweisen, wobei die Differenz zwischen den Anzahlen von Hohlräumen (102C) der mindestens zwei Reihen und/oder mindestens zwei Spalten größer oder gleich 1, oder genauer gesagt, größer oder gleich 2 ist.

14. Formvorrichtung (100) nach einem der Ansprüche 12 oder 13, wobei für jedes Motiv jedes Paar aufeinanderfolgend entlang der Maschinenrichtung (MD) angeordneter Reihen eine Anzahl von Hohlräumen aufweist, deren Veränderung kleiner oder gleich 40 % der Höchstanzahl von Hohlräumen (102C) der Reihen des Paares von Reihen von Hohlräumen (102C), typischerweise kleiner oder gleich 30 % oder 15 %, ist.

15. Formvorrichtung (100) nach einem der Ansprüche 12 bis 14, wobei jedes Motiv mindestens eine Reihe und/oder mindestens eine Spalte aufweist, die mindestens zwei Gruppen von getrennten Hohlräumen (102C) umfasst, die durch eine Zone ohne Hohlräume (102C) abgesondert sind.

16. Formvorrichtung (100) nach einem der Ansprüche 12 bis 15, wobei für jedes Motiv jede Zone ohne Hohlräume (102C), die in dem Motiv beinhaltet ist, eine Breite und eine Länge aufweist, derart dass das Verhältnis zwischen der Länge und der Breite strikt größer als 1,2, insbesondere strikt größer als 1,5, ist.

17. Formvorrichtung (100) nach einem der Ansprüche 12 bis 16, wobei die Spalten und Reihen regelmäßig entlang einem Querintervall beziehungsweise einem Maschinenintervall beabstandet sind.

18. Formvorrichtung (100) nach Anspruch 17, wobei jedes Motiv vollständig von einer Region der äußeren Seite (102B) des Formbands (102) ohne Hohlräume (102C) umgeben ist, wobei die Region eine Abmessung aufweist, die strikt größer als das Zweifache des Maschinenintervalls entlang der Maschinenrichtung (MD) und strikt größer als das Zweifache des Querintervalls entlang der Querrichtung (CD) ist.

## Claims

1. A retaining device (10) comprising:
- a base (12) having an upper face (12A) and a lower face (12B), the base (12) extending along a primary direction (DP), having a width defined along a secondary direction (DS) perpendicular to the primary direction (DP), and a thickness measured along a direction perpendicular to the primary direction (DP) and to the secondary direction (DS),
- a plurality of retaining elements (16) extending on the upper face (12A) of the base (12), each retaining element (16) comprising a rod (18), the retaining elements (16) being integrally formed with the base (12), the retaining elements (16) being arranged in rows and in columns extending respectively along the secondary direction (DS) and the primary direction (DP),
wherein
at least X rows and/or X columns of the retaining device have distinct numbers of retaining elements (16), where X is equal to 2,
said plurality of retaining elements forms one or several disjoint patterns, each pattern being formed of a plurality of rows and columns of retaining elements, each pattern being delimited by an outer contour (14A), and wherein each pattern comprises, in the area delimited by its outer contour (14A), at least one area devoid of retaining elements,
said device being **characterized in that**
for each pattern, at least one area devoid of retaining elements (16) included in the pattern has a width and a length, so that the ratio between the length and the width is strictly greater than 1.2.

2. The retaining device (10) according to claim 1, wherein at least two rows and/or at least two columns of the retaining device have a distinct number of retaining elements, the difference between the numbers of retaining elements of said at least two rows and/or at least two columns being greater than or equal to 1, or more specifically, greater than or equal to 2.

3. The retaining device (10) according to any one of claims 1 or 2, wherein for each pattern, each pair of rows arranged successively along the primary direction (DP) has a number of retaining elements whose variation is less than or equal to 10 retaining elements, particularly less than or equal to 5 retaining elements.

4. The retaining device (10) according to any of claims 1 or 3, wherein for each pattern, each pair of columns arranged successively along the secondary direction (DS) has a number of retaining elements (16) whose variation is less than or equal to 15 retaining elements (16), particularly less than or equal to 5 retaining elements.

5. The retaining device (10) according to any of claims 1 to 4, wherein each pattern is entirely surrounded by a region of the upper face (12A) of the base (12) devoid of retaining elements (16), and is located at a distance greater than 1.5 mm, particularly, greater than 2.5 mm from a border of the base (12), particularly from all the borders of the base (12).

6. The retaining device (10) according to claim 5, wherein each pattern has at least one row and/or at least one column comprising at least two groups of disjoint retaining elements (16) separated by an area devoid of retaining elements (16).

7. The retaining device (10) according to any of claims 1 or 6, wherein for each pattern, each area devoid of retaining elements (16) included in the pattern has a width and a length, so that the ratio between the length and the width is strictly greater than 1.2 or more particularly strictly greater than 1.5.

8. The retaining device (10) according to any of claims 1 to 7, wherein said rows and columns are evenly spaced according to a secondary interval and a primary interval respectively.

9. The retaining device (10) according to claim 8, wherein each pattern is entirely surrounded by a region of the upper face (12A) of the base (12) devoid of retaining elements (16), said region having a dimension strictly greater than twice the primary interval along the primary direction (DP), and/or strictly greater than twice the secondary interval along the secondary direction (DS).

10. The retaining device (10) according to claim 1 to 9, wherein said at least one area devoid of retaining elements (16) comprised in the area delimited by the outer contour (14A) of each pattern has a dimension along the primary direction (DP) strictly greater than twice the primary interval, and a dimension along the secondary direction (DS) strictly greater than twice the secondary interval.

11. The retaining device (10) according to any of claims 1 to 10, wherein for each pattern, the ratio between the surface of the areas devoid of retaining elements (16) contained in the outer contour (14A) of the pattern and the surface comprising retaining elements (16) is less than 1.

12. A molding device (100) for forming a retaining device, for example according to any of the preceding claims, said molding device (100) comprising a molding strip (102) adapted to be mounted on a support (104), said molding strip (102) extending along a machine direction (MD), having a width defined along a transverse direction (CD) perpendicular to the machine direction (MD), and a thickness measured along a direction perpendicular to the machine direction (MD) and to the transverse direction (CD), the molding strip having opposite inner face and outer face, said molding strip (102) having a plurality of cavities (102C) arranged in rows and columns extending respectively along the transverse direction (CD) and the machine direction (MD), said cavities (102C) opening out onto the outer face (102B) of the molding strip (102),
wherein
at least Y rows and/or Y columns of cavities (102C) of the molding strip (102) have distinct numbers of cavities (102C), where Y is equal to 2,
said plurality of cavities (102C) form one or several disjoint patterns, each pattern being formed of a plurality of rows and columns of cavities (102C), wherein each pattern is delimited by an outer contour, and wherein each pattern comprises, in the area delimited by its outer contour, at least one area devoid of cavities (102C),
**characterized in that**
wherein for each pattern, at least one area devoid of cavities (102C) included in the pattern has a width and a length so that the ratio between the length and the width is strictly greater than 1.2.

13. The molding device (100) according to claim 12, wherein at least two rows and/or at least two columns of the molding device (100) have a distinct number of cavities (102C), the difference between the numbers of cavities (102C) of said at least two rows and/or at least two columns being greater than or equal to 1, or more specifically greater than or equal to 2.

14. The molding device (100) according to any one of claims 12 or 13, wherein for each pattern, each pair of rows arranged successively along the machine direction (MD) has a number of cavities whose variation is less than or equal to 40% of the maximum number of cavities (102C) of the rows of said pair of rows of cavities (102C), typically less than or equal to 30% or 15%.

15. The molding device (100) according to any one of claims 12 to 14, wherein each pattern has at least one row and/or at least one column comprising at least two disjoint groups of cavities (102C) separated by an area devoid of cavities (102C).

16. The molding device (100) according to any of claims 12 to 15, wherein for each pattern, each area devoid of cavities (102C) included in the pattern has a width and a length so that the ratio between the length and the width is strictly greater than 1.2, particularly strictly greater than 1.5.

17. The molding device (100) according to any of claims 12 to 16, wherein said columns and rows are evenly spaced according to a transverse interval and a machine interval respectively.

18. The molding device (100) according to claim 17, wherein each pattern is entirely surrounded by a region of the outer face (102B) of the molding strip (102) devoid of cavities (102C), said region having a dimension strictly greater than twice the machine interval along the machine direction (MD), and strictly greater than twice the transverse interval along the transverse direction (CD).
